(19) Europäisches Patentamt
European Patent Office
Office européen des brevets

(11) **EP 3 519 851 B1**

(12) **EUROPÄISCHE PATENTSCHRIFT**

(45) Veröffentlichungstag und Bekanntmachung des Hinweises auf die Patenterteilung:
**21.10.2020 Patentblatt 2020/43**

(51) Int Cl.:
*G01S 17/08* (2006.01)    *G01S 13/84* (2006.01)
*H04W 64/00* (2009.01)    *G01S 5/00* (2006.01)
*G01S 5/02* (2010.01)    *G01S 11/08* (2006.01)
*H04L 5/00* (2006.01)

(21) Anmeldenummer: **17743014.7**

(22) Anmeldetag: **21.07.2017**

(86) Internationale Anmeldenummer:
**PCT/EP2017/068504**

(87) Internationale Veröffentlichungsnummer:
**WO 2018/059782 (05.04.2018 Gazette 2018/14)**

(54) **TELEGRAM SPLITTING BASIERTE LOKALISIERUNG**

TELEGRAM SPLITTING-BASED LOCALIZATION

LOCALISATION BASÉE SUR UNE DIVISION DE TÉLÉGRAMMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2016 DE 102016219093**

(43) Veröffentlichungstag der Anmeldung:
**07.08.2019 Patentblatt 2019/32**

(73) Patentinhaber:
• **Fraunhofer Gesellschaft zur Förderung der angewandten Forschung E.V.**
**80686 München (DE)**
• **Friedrich-Alexander-Universität Erlangen-Nürnberg**
**91054 Erlangen (DE)**

(72) Erfinder:
• **KILIAN, Gerd**
**91056 Erlangen (DE)**
• **HADASCHIK, Niels**
**81827 München (DE)**
• **FASSBINDER, Marc**
**90419 Nürnberg (DE)**

• **BERNHARD, Josef**
**92507 Nabburg (DE)**
• **ROBERT, Jörg**
**91080 Uttenreuth (DE)**
• **THIELECKE, Jörn**
**91056 Erlangen (DE)**
• **HARTMANN, Markus**
**92237 Sulzbach-Rosenberg (DE)**
• **TRÖGER, Hans-Martin**
**95499 Harsdorf (DE)**
• **KEMETH, Ferdinand**
**91353 Hausen (DE)**

(74) Vertreter: **Schlenker, Julian et al
Schoppe, Zimmermann, Stöckeler
Zinkler, Schenk & Partner mbB
Patentanwälte
Radlkoferstraße 2
81373 München (DE)**

(56) Entgegenhaltungen:
WO-A1-2012/061479    WO-A2-02/01247
DE-A1-102009 060 592    DE-A1-102011 082 098

**Beschreibung**

Ausführungsbeispiele der vorliegenden Erfindung beziehen sich auf einen Datenempfänger. Weitere Ausführungsbeispiele beziehen sich auf ein Kommunikationssystem mit einem Datensender und zumindest einem Datenempfänger. Manche Ausführungsbeispiele beziehen sich auf Telegram Splitting (dt. Telegrammaufteilung) basierte Lokalisierung.

Die DE 10 2009 060 592 B4 beschreibt ein Verfahren zu Abstandsmessung zwischen zwei Knoten mit Hilfe eines Frequenzsprungverfahrens (bspw. aus IEEE802.15.4). Dabei ändern zwei Knoten A und B ihre Lokaloszillator (LO) Frequenzen im gleichen Abstand $\Delta f$. Beide Knoten senden sich Datenpakte (idealisiert einen Sinuston) auf unterschiedlicher Frequenz zu und bestimmen dann intern einen ersten Wert relativ zur Trägerphase. Danach werden beide Frequenzen um $\Delta f$ umgeschaltet und je ein zweiter Wert bestimmt. Aus der Differenz der beiden Phasenwerte wird die Distanz bestimmt. Quarztoleranzen heben sich in der Berechnung auf, wenn die zeitlichen Abstände der Aussendungen gleich sind. Zur Reduktion der Mehrwegausbreitung werden mehrere Messungen im gesamten Band durchgeführt und die Kanalimpulsantwort über IFFT errechnet um das erste Empfangssignal zu ermitteln.

Die DE 10 2011 082 098 beschreibt das Telegram Splitting. Hierbei werden Telegramme auf mehrere Teilpakete aufgeteilt. Ein solches Teilpacket wird als Hop bezeichnet. In einem Hop werden mehrerer Informationssymbole übertragen. Die Hops werden auf einer Frequenz oder aber über mehrere Frequenzen verteilt im sog. Frequenzsprungverfahren (engl. frequency hopping) gesendet. Zwischen den Hops gibt es Pausen, in denen nicht gesendet wird. Siehe auch [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013].

Ferner ist eine wiederholte Aussendung von Nachrichten (engl. retransmission) bekannt. In einem Aloha oder Slotted Aloha Verfahren werden Nachrichten zu einem zufälligen Zeitpunkt von einem Sensorknoten an die Basisstation gesendet. In der Folge kommt es bei mehreren Teilnehmern in einem Netz zu Kollisionen. Um die Kollisionswahrscheinlichkeit zu verringern, kann die Nachrichten wiederholt ausgesendet werden. Dieses wiederholte Aussenden der Nachricht kann auch auf verschiedenen Frequenzen erfolgen (engl. frequency hopping).

Die WO 2012/061479 A1 beschreibt ein Ortungssystem, bei dem mittels eines Sendegeräts zwei oder mehr Signale, die zwei oder mehr Datenpakete repräsentieren, über einen drahtlosen Kanal übertragen werden. Die zwei oder mehr Signale sind das Ergebnis von zwei oder mehr Übertragungen, die zeitlich nacheinander bei verschiedenen Mittenfrequenzen erfolgen, um eine gewünschte Bandbreite aufzuspannen. Mindestens eines der zwei oder mehr Signale enthält eine Präambel der physikalischen Schicht. Die Folge der zwei oder mehr Signalen wird unter Verwendung eines Empfangsgeräts empfangen. Eine Ankunftszeit eines oder mehrerer Signale der empfangenen Folge von Signalen wird unter Verwendung einer oder mehrerer der Signale der empfangenen Folge von Signalen, der Zeitdifferenzen zwischen den zwei oder mehreren Übertragungen, der verschiedenen Mittenfrequenzen, Informationen von den zwei oder mehreren Datenpaketen berechnet.

Die WO 02/01247 A2 beschreibt die Messung einer Distanz zwischen zwei Objekten, insbesondere im Rahmen einer Zugriffskontrolle auf ein Kraftfahrzeug. Es wird eine bidirektionale Übertragung zwischen einem tragbaren Codesender und einer Basisstation für den Zugang zu einem Kraftfahrzeug ausgeführt. Beide Signale werden miteinander korreliert und die Übertragung mit einer veränderten Trägerfrequenz wiederholt. Die Entfernung des Codesenders von der Basisstation wird aus der Differenz zweier Phasendifferenzmessungen zwischen dem gesendeten und dem empfangenen Signal in einer Station bestimmt.

Der vorliegenden Erfindung liegt die Aufgabe zugrunde, ein Konzept zu schaffen, welches eine genauere und/oder robustere Lokalisierung von einer Vielzahl von Sensorknoten in einem Telemetriesystem ermöglicht.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datenempfänger mit einer Einrichtung zum Empfangen von Subdatenpaketen, einer Einrichtung zum Ermitteln einer Phasendifferenz und eine Einrichtung zum Ermitteln einer Distanzdifferenz. Die Einrichtung zum Empfangen von Subdatenpaketen ist ausgebildet, um zumindest zwei Subdatenpakete von einem Datensender zu empfangen, und um die zumindest zwei Subdatenpakete zu kombinieren, um ein Datenpaket zu erhalten, das von dem Datensender aufgeteilt in die zumindest zwei Subdatenpakete gesendet wird, wobei jedes der zumindest zwei Subdatenpakete kürzer ist als das Datenpaket, wobei die Einrichtung zum Empfangen von Subdatenpaketen ausgebildet ist, um die zumindest zwei Subdatenpakete auf zumindest zwei unterschiedlichen Trägerfrequenzen zu empfangen. Die Einrichtung zum Ermitteln einer Phasendifferenz ist ausgebildet, um eine durch die zumindest zwei unterschiedlichen Trägerfrequenzen und der Pfadverzögerung hervorgerufene Phasendifferenz zwischen den zumindest zwei Subdatenpaketen zu ermitteln. Die Einrichtung zum Ermitteln einer Distanzdifferenz zwischen dem Datenempfänger und dem Datensender ist ausgebildet, um die Distanzdifferenz basierend auf der ermittelten Phasendifferenz zwischen den zumindest zwei Subdatenpaketen zu ermitteln.

Weitere Ausführungsbeispiele schaffen ein Kommunikationssystem mit einem Datensender und einem Datenempfänger. Der Datensender umfasst eine Einrichtung zum Erzeugen von Subdatenpaketen, die ausgebildet ist, um ein Datenpaket in zumindest zwei Subdatenpakete aufzuteilen, wobei jedes der zumindest zwei Subdatenpakete kürzer ist als das Datenpaket, und einer Einrichtung zum Senden von Subdatenpaketen, die ausgebildet ist, um die zumindest zwei Subdatenpakete auf zumindest zwei unterschiedlichen Trägerfrequenzen zu dem Datenempfänger zu senden. Der Datenempfänger umfasst eine Einrichtung zum Empfangen von Subdatenpaketen, eine Einrichtung zum Ermitteln einer Phasendifferenz und eine Einrichtung zum Ermitteln einer Distanzdifferenz. Die Einrichtung zum Empfangen von Subdatenpaketen ist ausgebildet, um zumindest zwei Subdatenpakete von einem Datensender zu empfangen, und um die zumindest zwei Subdatenpakete zu kombinieren, um ein Datenpaket zu erhalten, das von dem Datensender aufgeteilt in die zumindest zwei Subdatenpakete gesendet wird, wobei jedes der zumindest zwei Subdatenpakete kürzer ist als das Datenpaket, wobei die Einrichtung zum Empfangen von Subdatenpaketen ausgebildet ist, um die zumindest zwei Subdatenpakete auf zumindest zwei unterschiedlichen Trägerfrequenzen zu empfangen. Die Einrichtung zum Ermitteln einer Phasendifferenz ist ausgebildet, um eine durch die zumindest zwei unterschiedlichen Trägerfrequenzen und der Pfadverzögerung hervorgerufene Phasendifferenz zwischen den zumindest zwei Subdatenpaketen zu ermitteln. Die Einrichtung zum Ermitteln einer Distanzdifferenz zwischen dem Datenempfänger und dem Datensender ist ausgebildet, um die Distanzdifferenz basierend auf der ermittelten Phasendifferenz zwischen den zumindest zwei Subdatenpaketen zu ermitteln.

Weitere Ausführungsbeispiele schaffen ein Verfahren zum Ermitteln einer Distanzdifferenz zwischen einem Datensender und einem Datenempfänger. Das Verfahren umfasst einen Schritt des Empfangens von zumindest zwei Subdatenpaketen mit einem Datenempfänger, die von einem Datensender auf zumindest zwei unterschiedlichen Trägerfrequenzen ausgesendet werden. Ferner umfasst das Verfahren einen Schritt des Kombinierens der zumindest zwei Subdatenpakete, um ein Datenpaket zu erhalten, das von dem Datensender aufgeteilt in die zumindest zwei Subdatenpakete gesendet wird, wobei jedes der zumindest zwei Subdatenpakete kürzer ist als das Datenpaket. Ferner umfasst das Verfahren einen Schritt des Ermittelns einer durch die zumindest zwei unterschiedlichen Trägerfrequenzen und der Pfadverzögerung hervorgerufenen Phasendifferenz zwischen den zumindest zwei Subdatenpaketen am Datenempfänger. Ferner umfasst das Verfahren einen Schritt des Ermittelns einer Distanzdifferenz zwischen dem Datenempfänger und dem Datensender basierend auf der ermittelten Phasendifferenz zwischen den zumindest zwei Subdatenpaketen.

Ausführungsbeispiele der vorliegenden Erfindung werden bezugnehmend auf die beiliegenden Figuren näher beschrieben. Es zeigen:

Fig. 1    ein schematisches Blockschaltbild eines Systems mit einem Datensender und einem Datenempfänger, gemäß einem Ausführungsbeispiel;

Fig. 2    in einem Diagramm eine Belegung des Übertragungskanals bei der Übertragung eines Datenpakets unter Verwendung des Telegram Splitting Verfahrens;

Fig. 3    eine schematische Ansicht eines Kommunikationssystems mit einem Datensender und zwei Datenempfängern, gemäß einem Ausführungsbeispiel;

Fig. 4a    in einem Diagramm ein Signal, das einen linearen Frequenzanstieg aufweist;

Fig. 4b    in einem Diagramm ein Signal, das einen treppenförmigen Frequenzanstieg aufweist;

Fig. 5    in einem Diagramm ein Signal, dessen Frequenzsprünge in der Zeit verteilt sind, gemäß einem Ausführungsbeispiel;

Fig. 6    in einem Diagramm eine Verteilung der Mehrzahl von Sub-Datenpaketen auf unterschiedliche Trägerfrequenzen derart, dass Teil der unterschiedlichen Trägerfrequenzen benachbart zu Frequenzrändern des zur Übertragung verwendeten Frequenzbands liegen, gemäß einem Ausführungsbeispiel;

Fig. 7    in einem Diagramm eine Position eines Sensorknotens, die Positionen von zwei Basisstationen 110 sowie drei Hyperbel-Scharen, die durch mehrdeutige Phasendifferenzmessung entstehen, gemäß einem Ausführungsbeispiel;

Fig. 8    eine schematische Ansicht eines Kommunikationssystems mit mehreren Sensorknoten und zwei Basisstationen, gemäß einem Ausführungsbeispiel;

Fig. 9    eine schematische Ansicht eines Datenpakets sowie eine Aufteilung desselben in eine Mehrzahl von Sub-Datenpaketen, die in der Zeit und in der Frequenz verteilt sind, gemäß einem Ausführungsbeispiel; und

Fig. 10    ein Flussdiagramm eines Verfahrens zum Ermitteln einer Distanzdifferenz zwischen Datenempfänger und Datensender, gemäß einem Ausführungsbeispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

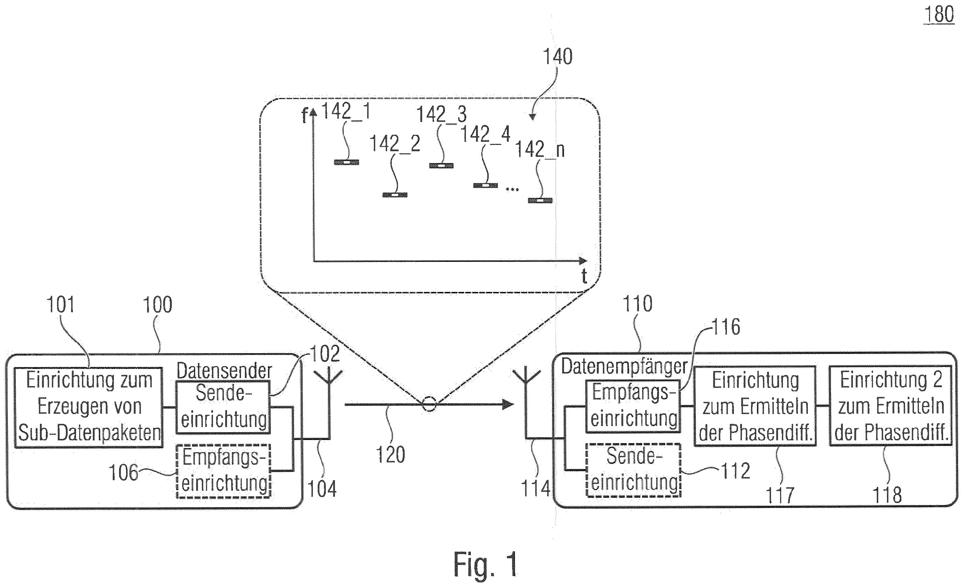

Fig. 1 zeigt ein schematisches Blockschaltbild eines Kommunikationssystems 180 mit einem Datensender 100 und einem Datenempfänger 110, gemäß einem Ausführungsbeispiel.

Der Datensender 100 umfasst eine Einrichtung zum Erzeugen von Subdatenpaketen 142_1 bis 142_n, die ausgebildet ist, um ein Datenpaket in zumindest zwei Subdatenpakete 142_1 bis 142_n ($n \geq 2$) aufzuteilen, wobei jedes der zumindest zwei Subdatenpakete 142_1 bis 142_n kürzer ist als das Datenpaket, und einer Einrichtung (Sendeeinrichtung) 102 zum Senden von Subdatenpaketen, die ausgebildet ist, um die zumindest zwei Subdatenpakete 142_1 bis 142_n auf zumindest zwei unterschiedlichen Trägerfrequenzen zu dem Datenempfänger 110 zu senden.

Der Datenempfänger 110 umfasst eine Einrichtung (Empfangseinrichtung) 116 zum Empfangen von Subdatenpaketen, eine Einrichtung 117 zum Ermitteln einer Phasendifferenz und eine Einrichtung 118 zum Ermitteln einer Distanzdifferenz.

Die Einrichtung 116 zum Empfangen von Subdatenpaketen ist ausgebildet, um die zumindest zwei Subdatenpakete 142_1 bis 142_n von dem Datensender 100 zu empfangen, und um die zumindest zwei Subdatenpakete 142_1 bis 142_n zu kombinieren, um das Datenpaket zu erhalten, das von dem Datensender 100 aufgeteilt in die zumindest zwei Subdatenpakete 142_1 bis 142_n gesendet wird, wobei jedes der zumindest zwei Subdatenpakete 142_1 bis 142_n kürzer ist als das Datenpaket, wobei die Einrichtung 116 zum Empfangen von Subdatenpaketen ausgebildet ist, um die zumindest zwei Subdatenpakete142_1 bis 142_n auf den zumindest zwei unterschiedlichen Trägerfrequenzen zu empfangen.

Die Einrichtung 117 zum Ermitteln einer Phasendifferenz ist ausgebildet, um eine durch die zumindest zwei unterschiedlichen Trägerfrequenzen und der Pfadverzögerung hervorgerufene Phasendifferenz zwischen den zumindest zwei Subdatenpaketen 142_1 bis 142_n zu ermitteln.

Die Einrichtung 118 zum Ermitteln einer Distanzdifferenz zwischen dem Datenempfänger 110 und dem Datensender 100 ist ausgebildet, um die Distanzdifferenz basierend auf der ermittelten Phasendifferenz zwischen den zumindest zwei Subdatenpaketen 142_1 bis 142_n zu ermitteln.

Wie in Fig. 1 beispielhaft gezeigt ist, kann der Datensender 100 eine Sendeeinrichtung 102 aufweisen, die ausgebildet ist, um die Mehrzahl von Subdatenpaketen 142_1 bis 142_n zu senden. Die Sendeeinrichtung 102 kann zum Beispiel ein Sendemodul oder Transmitter sein. Auch die Einrichtung 101 zum Erzeugen von Subdatenpaketen kann in dem Sendemodul oder Transmitter implementiert sein. Die Sendeeinrichtung 102 kann mit einer Antenne 104 des Datensenders 100 verbunden sein. Der Datensender 100 kann optional eine Empfangseinrichtung (oder Empfangsmodul, oder Receiver) 106 aufweisen, die ausgebildet ist, um Daten (z.B. ein Datenpaket, oder eine Mehrzahl von Subdatenpaketen) zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung 116 aufweisen, die ausgebildet ist, um Daten 120 zu empfangen. Die Empfangseinrichtung 116 kann zum Beispiel ein Empfangsmodul oder ein Receiver sein. Auch die Einrichtung 117 zum Ermitteln der Phasendifferenz und/oder die Einrichtung 118 zum Ermitteln der Distanzdifferenz können in dem Empfangsmodul oder Receiver implementiert sein. Die Empfangseinrichtung 116 kann mit einer Antenne 114 des Datenempfängers 110 verbunden sein. Optional kann der Datenempfänger 110 eine Sendeeinrichtung (oder Sendemodul, oder Transmitter) 112 aufweisen, die ausgebildet ist, um Daten (z.B. ein Datenpaket, oder eine Mehrzahl von Subdatenpaketen) zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Typischerweise umfasst ein Kommunikationssystem 180 zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können ausgebildet sein, um Daten 120 unter Verwendung des Telegram-Splitting-Verfahrens (dt. Telegrammaufteilungsverfahrens) zu senden bzw. zu empfangen. Hierbei wird ein Telegramm bzw. Datenpaket in eine Mehrzahl von Sub-Datenpakete (oder Teildatenpakte, oder Teilpakete) 142_1 bis 142_N aufgeteilt und die Sub-Datenpakete 142_1 bis 142_n entsprechend eines Sprungmusters 140 in der Zeit verteilt und/oder in der Frequenz verteilt von dem Datensender 100 zu dem Datenempfänger 110 übertragen, wobei der Datenempfänger 110 die Sub-Datenpakete wieder zusammenfügt (oder kombiniert), um das Datenpaket zu erhalten. Jedes der Sub-Datenpakete 142_1 bis 142_n enthält dabei nur einen Teil des Datenpakets. Das Datenpaket kann ferner kanalcodiert sein, so dass zum fehlerfreien Decodieren des Datenpakets nicht alle Sub-Datenpakete 142_1 bis 142_n sondern nur ein Teil der Sub-Datenpakete 142_1 bis 142_n erforderlich ist.

Die zeitliche Verteilung der Mehrzahl von Sub-Datenpaketen 142 kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen angeben, mit denen die Sub-Datenpakete 142_1 bis 142_n gesendet werden. Beispielsweise kann ein erstes Sub-Datenpaket 142_1 zu einem ersten Sendezeitpunkt (oder in einem ersten Sendezeitschlitz) und ein zweites Sub-Datenpaket 142_2 zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpakete 142_1 bis 142_n können Sendepausen vorhanden sein in denen nicht gesendet wird. Die Sub-Datenpakete 142_1 bis 142_n können sich auch zeitlich überlappen (überschneiden).

Ein Frequenzsprungmuster kann eine Abfolge von Sendefrequenzen oder Sendefrequenzsprüngen angeben, mit denen die Sub-Datenpakete 142_1 bis 142_n gesendet werden. Beispielsweise kann ein erstes Sub-Datenpaket 142_1 mit einer ersten Sendefrequenz (oder in einem ersten Frequenzkanal) und ein zweites Sub-Datenpaket 142_2 mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpakete 142_1 bis 142_n auch sowohl in der Zeitals auch in der Frequenz verteilt von dem Datensender 100 zu dem Datenempfänger 110 übertragen werden. Die Verteilung der Mehrzahl von Sub-Datenpakete 142_1 bis 142_n in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete 142_1 bis 142_n übertragen werden, wobei den Sendezeitpunkten (oder Sendezeitabständen) Sendefrequenzen (oder Sendefrequenzsprünge) zugeordnet sind.

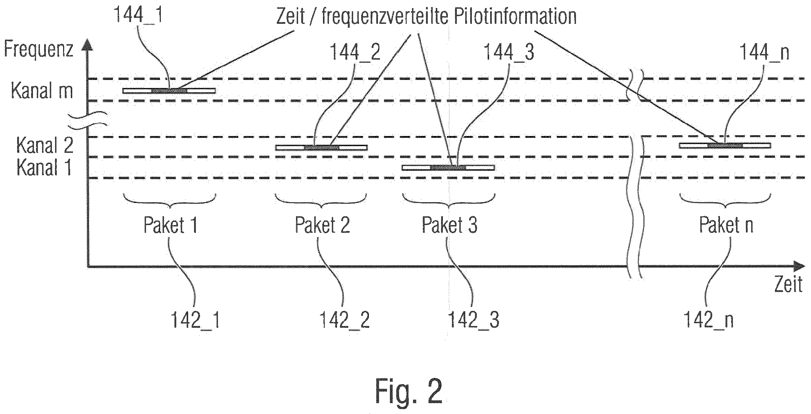

Fig. 2 zeigt in einem Diagramm eine Belegung des Übertragungskanals bei der Übertragung eines Datenpakets unter Verwendung des Telegram Splitting Verfahrens. Dabei beschreibt die Ordinate die Frequenz und die Abszisse die Zeit.

Wie in Fig. 2 zu erkennen ist, kann hierbei das Datenpaket auf die Mehrzahl von Sub-Datenpakete 142_1 bis 142_n aufgeteilt werden und entsprechend eines Zeit- und Frequenzsprungmusters verteilt in der Zeit (z.B. in unterschiedlichen Zeitschlitzen) und der Frequenz (z.B. in unterschiedlichen Frequenzkanälen) von dem Datensender 100 zu dem Datenempfänger 110 übertragen werden.

Wie in Fig. 2 weiter zu erkennen ist, kann auch eine Synchronisationssequenz (oder Pilotsequenz) auf die Mehrzahl von Sub-Datenpakete 142_1 bis 142_n aufgeteilt werden, so dass die Mehrzahl von Sub-Datenpaketen 142_1 bis 142_n jeweils eine Teilsynchronisationssequenz (oder Teilpilotsequenz) 144_1 bis 144_n enthalten.

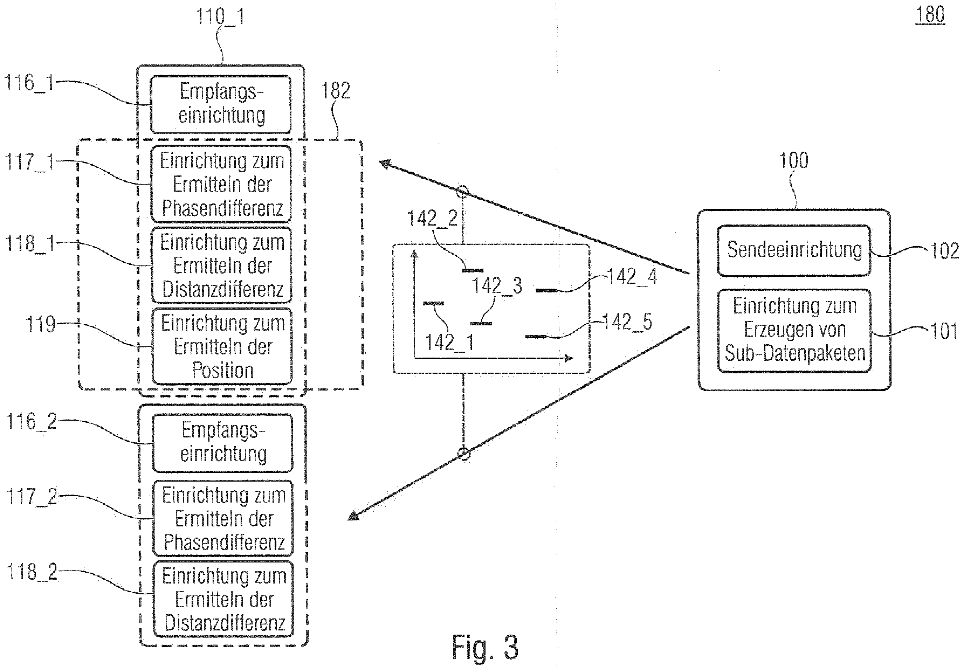

Fig. 3 zeigt eine schematische Ansicht eines Kommunikationssystems 180 mit einem Datensender 100 und zwei Datenempfängern 110_1 und 110_2, gemäß einem Ausführungsbeispiel.

Der Datensender 100 umfasst eine Einrichtung zum Erzeugen von Subdatenpaketen 142_1 bis 142_n, die ausgebildet ist, um ein Datenpaket in zumindest zwei Subdatenpakete 142_1 bis 142_n (n ≥ 2) aufzuteilen, wobei jedes der zumindest zwei Subdatenpakete 142_1 bis 142_n kürzer ist als das Datenpaket, und einer Einrichtung (Sendeeinrichtung) 102 zum Senden von Subdatenpaketen, die ausgebildet ist, um die zumindest zwei Subdatenpakete 142_1 bis 142_n auf zumindest zwei unterschiedlichen Trägerfrequenzen zu dem Datenempfänger 110 zu senden.

Der erste Datenempfänger 110_1 umfasst eine Einrichtung (Empfangseinrichtung) 116_1 zum Empfangen von Subdatenpaketen, die ausgebildet ist, um die zumindest zwei Subdatenpakete 142_1 bis 142_n von dem Datensender 100 zu empfangen, und um die zumindest zwei Subdatenpakete 142_1 bis 142_n zu kombinieren, um das Datenpaket zu erhalten, das von dem Datensender 100 aufgeteilt in die zumindest zwei Subdatenpakete 142_1 bis 142_n gesendet wird, wobei jedes der zumindest zwei Subdatenpakete 142_1 bis 142_n kürzer ist als das Datenpaket, wobei die Einrichtung 116_1 zum Empfangen von Subdatenpaketen ausgebildet ist, um die zumindest zwei Subdatenpakete 142_1 bis 142_n auf den zumindest zwei unterschiedlichen Trägerfrequenzen zu empfangen.

Ferner umfasst das Kommunikationssystem 180 eine Einrichtung 117_1 zum Ermitteln einer Phasendifferenz, die ausgebildet ist, um eine durch die zumindest zwei unterschiedlichen Trägerfrequenzen und der Pfadverzögerung hervorgerufene Phasendifferenz zwischen den zumindest zwei Subdatenpaketen 142_1 bis 142_n zu ermitteln.

Ferner umfasst das Kommunikationssystem 180 eine Einrichtung 118_1 zum Ermitteln einer Distanzdifferenz zwischen dem Datenempfänger 110 und dem Datensender 100 ist ausgebildet, um die Distanzdifferenz basierend auf der ermittelten Phasendifferenz zwischen den zumindest zwei Subdatenpaketen 142_1 bis 142_n zu ermitteln.

Bei Ausführungsbeispielen kann der ersten Datenempfänger 110_1 die Einrichtung 117_1 zum Ermitteln einer Phasendifferenz und/oder die Einrichtung 118_1 zum Ermitteln einer Distanzdifferenz umfassen. Alternativ kann das Kommunikationssystem 180 eine zentrale Verarbeitungseinrichtung 182 aufweisen, die die Einrichtung 117_1 zum Ermitteln einer Phasendifferenz und/oder die Einrichtung 118_1 zum Ermitteln einer Distanzdifferenz umfasst.

Der zweite Datenempfänger 110_2 kann ebenfalls eine Einrichtung 116_2 zum Empfangen von Subdatenpaketen aufweisen, die ausgebildet ist, um die zumindest zwei Subdatenpakete 142_1 bis 142_n von dem Datensender 100 zu empfangen, und um die zumindest zwei Subdatenpakete 142_1 bis 142_n zu kombinieren, um das Datenpaket zu erhalten, das von dem Datensender 100 aufgeteilt in die zumindest zwei Subdatenpakete gesendet wird, wobei die Einrichtung 116_2 zum Empfangen von Subdatenpaketen ausgebildet ist, um die zumindest zwei Subdatenpakete auf zumindest zwei unterschiedlichen Trägerfrequenzen zu empfangen.

Die Einrichtung 117_1 zum Ermitteln der Phasendifferenz (z.B. des ersten Datenempfängers 110_1 oder der zentralen Verarbeitungseinrichtung 182) oder eine weitere Einrichtung 117_2 zum Ermitteln einer Phasendifferenz (z.B. des zweiten Datenempfängers 110_2) kann ausgebildet sein, um eine durch die zumindest zwei unterschiedlichen Trägerfrequenzen hervorgerufenen weitere Phasendifferenz zwischen den zumindest zwei Subdatenpaketen zu ermitteln.

Die Einrichtung 118_1 zum Ermitteln einer Distanzdifferenz (z.B. des ersten Datenempfängers 110_1 oder der zentralen Verarbeitungseinrichtung 182) oder eine weitere Einrichtung 118_2 zum Ermitteln einer Distanzdifferenz (z.B. des zweiten Datenempfängers 110_2) kann ausgebildet sein, um eine weitere Distanzdifferenz zwischen dem zweiten Datenempfänger 110_2 und dem Datensender 110 basierend auf der ermittelten weiteren Phasendifferenz zwischen den zumindest zwei Subdatenpaketen 142_1 bis 142_n zu ermitteln.

Bei Ausführungsbeispielen kann das Kommunikationssystem 180 eine Einrichtung 119 zum Ermitteln einer Position des Datensenders 100 aufweisen, die ausgebildet ist, um eine Position des Datensenders 100 basierend auf der ermittelten Phasendifferenz und der ermittelten weiteren Phasendifferenz zu ermitteln.

Die Einrichtung 119 zum Ermitteln einer Position des Datensenders 100 kann entweder in einem der beiden Datenempfängern 110_1 und 110_2 integriert sein oder in der zentralen Verarbeitungseinrichtung 182 des Kommunikationssystems 180.

Im Folgenden werden detaillierte Ausführungsbeispiele des Datensenders 100 und Datenempfängers 110 (bzw. der beiden Datenempfänger 110_1 und 110_2) näher beschrieben.

Hierbei wird beispielhaft davon ausgegangen, dass das in Fig. 1 gezeigte Kommunikationssystem 180 mit Datensender 100 und Datenempfänger 110 ein LPWA (LPWA = Low-Power Wide-Area) Netzwerk mit synchronisierten Basisstationen 110 (vorzugsweise über GPS mit einer Genauigkeit im Bereich von 15 ns) ist. Mehrere Basisstationen 110 empfangen das Sendesignal 120 eines Sensorknotens (Datensenders, z.B. ein Tag mit Sensor) 100, der unidirektional oder bidirektional ausgeführt sein kann. Der Sensorknoten 100 kann seine Daten 120 auf mehreren Frequenzen verteilt senden.

Die nachfolgende Beschreibung ist jedoch auch auf andere Kommunikationssysteme als das LPWA Netzwerk anwendbar. Ferner ist die nachfolgende Beschreibung auch auf andere Implementierungen des Datensenders 100 und Datenempfängers 110 anwendbar. So ist der Datenempfänger 110 nicht auf Implementierungen als (synchronisierte) Basisstation beschränkt, während der Datensender 100 nicht auf Implementierungen als Sensorknoten beschränkt ist.

Frequenz-Sweep mit Treppen

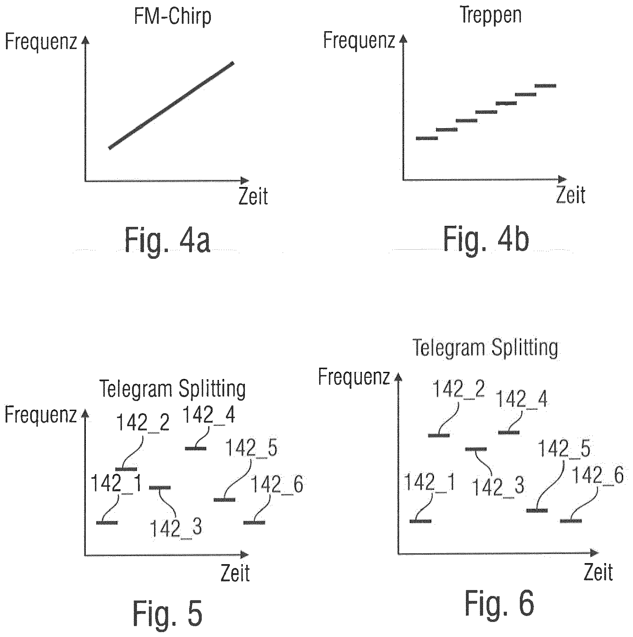

Anstelle ein Signal zu senden, das einen linearen Frequenzanstieg aufweist, wie dies beispielsweise in Fig. 4a gezeigt ist, kann bei Ausführungsbeispielen der Sensorknoten 100 ausgebildet sein, um ein Signal zu senden, das einen treppenförmigen Frequenzanstieg bzw. einen sprunghaften Frequenzanstieg (Frequenzsprünge 142_1 bis 142_7) aufweist, wie dies in Fig. 4b gezeigt ist. Im Detail zeigt Fig. 4a in einem Diagramm ein Signal, das einen linearen Frequenzanstieg (Frequenz-Chirp, oder FM-Chirp) aufweist, während Fig. 4b in einem Diagramm ein Signal zeigt, das einen treppenförmigen Frequenzanstieg aufweist. Dabei beschreibt in Fig. 4a und 4b die Ordinate die Frequenz und die Abszisse die Zeit.

Gegenüber dem in Fig. 4a gezeigtem Signal mit dem linearen Frequenzanstieg hat das in Fig. 4b gezeigte Signal mit dem treppenförmigen Frequenzanstieg den Vorteil, dass dieses durch viele kommerziell erhältliche Telemetrie-Chips erzeugbar ist. Ferner hat dieses Signal den Vorteil, dass innerhalb der Stufen kohärent gearbeitet bzw. gesendet werden kann. Zudem hat dieses Signal den Vorteil, dass durch die Verwendung von vielen Frequenzen Multipfad-Ausbreitungen detektiert bzw. herausgerechnet werden können.

### Telegram Splitting

Bei Ausführungsbeispielen kann der Sensorknoten 100 ferner ausgebildet sein, um Stufen des in Fig. 4b gezeigten Signals mit dem treppenförmigen Frequenzanstieg in der Zeit und der Frequenz zu verteilen, wie dies in Fig. 5 gezeigt ist. Im Detail zeigt Fig. 5 in einem Diagramm ein Signal, dessen Frequenz sich Sprunghaft ändert. Dabei beschreibt in Fig. 5 die Ordinate die Frequenz und die Abszisse die Zeit.

Der Sensorknoten 100 kann also ausgebildet sein, um ein Signal zu senden, das eine Mehrzahl von Frequenzsprüngen 142_1 bis 142_6 aufweist, wobei zwischen den Frequenzsprüngen 142_1 bis 142_6 Sendepausen vorhanden sind, in denen der Datensender 100 nicht sendet. Dabei kann jeder der Frequenzsprünge 142_1 bis 142_6 eine andere Frequenz aufweisen bzw. in einem anderen Frequenzkanal gesendet werden. Um die Mehrzahl von Frequenzsprüngen 142_1 bis 142_6 zu erhalten kann der Datensender beispielsweise seine Trägerfrequenz ändern.

Ferner kann der Sensorknoten 100 ausgebildet sein, um in jedem der Mehrzahl von Frequenzsprüngen 142_1 bis 142_6 eines der Mehrzahl von Sub-Datenpaketen zusenden.

Bei Ausführungsbeispielen kann der Sensorknoten 100 also ausgebildet sein, um die Mehrzahl von Sub-Datenpaketen auf unterschiedlichen Trägerfrequenzen zu dem Datenempfänger 110 zu senden.

Gegenüber dem in Fig. 4b gezeigtem Signal mit dem treppenförmigen Frequenzanstieg hat das in Fig. 5 gezeigte Signal mit den Frequenzsprüngen, die in der Zeit und Frequenz verteilt sind, den Vorteil, dass dieses durch Zeitdiversität robust ist. Ferner hat dieses Signal den Vorteil, dass eine einfache Störer Detektion (engl. interference detection) durch die Sendepausen durchgeführt werden kann. Damit ist keine koordinierte Aussendung der Telemetrieknoten möglich, das Lokalisierungssystem wird robust und kann auch in unkoordinierten Bändern mit hohem Duty Cycle der Störer betrieben werden.

### Mehre HOPs an den Bandkanten

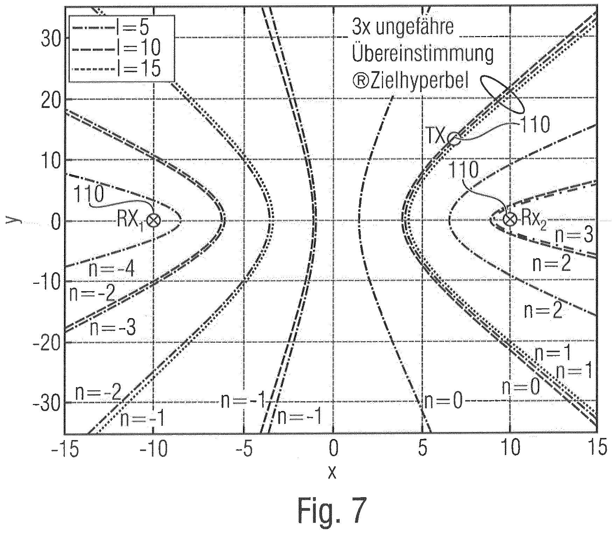

Bei Ausführungsbeispielen kann der Sensorknoten 100 ferner ausgebildet sein, um die Mehrzahl von Sub-Datenpaketen 142_1 bis 142_6 auf unterschiedlichen Trägerfrequenzen zu senden, wobei zumindest ein Teil der unterschiedlichen Trägerfrequenzen benachbart zu Frequenzrändern eines zur Übertragung verwendeten Frequenzbands liegen, wie dies in Fig. 7 gezeigt ist.

Fig. 6 zeigt in einem Diagramm eine Verteilung der Mehrzahl von Sub-Datenpaketen 142_1 bis 142_6 auf unterschiedliche Trägerfrequenzen derart, dass Teil der unterschiedlichen Trägerfrequenzen benachbart zu Frequenzrändern des zur Übertragung verwendeten Frequenzbands liegen. Dabei beschreibt die Ordinate die Frequenz und die Abszisse die Zeit.

Dass die Trägerfrequenzen benachbart zu den Frequenzrändern des Frequenzbands liegen, kann sich dabei darauf beziehen, dass ein Frequenzabstand zwischen den Trägerfrequenzen und dem jeweiligen Frequenzrand kleiner ist als ein Abstand zwischen den Trägerfrequenzen und einer Bandmitte.

Dass mehr HOPs (Sub-Datenpakete) an den Bandkanten angeordnet sind, hat den Vorteil einer höheren Ortungsgenauigkeit. Gemäß der Cramer Rao Bound erhöht mehr Signalenergie an den Bandkanten die Ortungsgenauigkeit. Gleichverteilte Energie erhöht die Multipfadauflösung.

### Gezieltes eneraieverteiltes Platzieren der Sub-Datenpakete

Bei Ausführungsbeispielen kann der Sensorknoten ausgebildet sein, um zwei oder mehr Datenpakete jeweils aufgeteilt auf eine Mehrzahl von Sub-Datenpaketen zu senden, wobei die Sub-Datenpakete der zwei oder mehr Datenpakete unterschiedlich in der Zeit und/oder Frequenz derart verteilt sein können, dass die Sub-Datenpakete eines der Datenpakete näher an den Bandkanten angeordnet sind, um eine Ortungsgenauigkeit des Sensorknotens 100 zu erhöhen, und dass die Sub-Datenpakete eines anderen der Datenpakete näher an der Bandmitte angeordnet sind, um eine Auflösung einer Multipfaddetektion zu erhöhen.

Mit anderen Worten, je nach Bedarf oder grundsätzlich kann der Sender zwei oder mehrfach unterschiedlich verteilte Telegramme senden. Pakete mit Energie in den Bandkanten zur erhöhten Ortungsgenauigkeit, andere im Spektrum verteilte Telegramme dienen zur besseren Multipfadauflösung. Es ist vorstellbar diese Verteilung adaptiv (anhand von momentanen aber auch anhand von historischen Messungen) vorzunehmen, d.h. bei Detektion eines mehrwegearmen Szenarios anhand der Betrachtung mehrerer verteilter Unterbänder werden bei künftigen Übertragungen nur oder vor allem die Bandkanten besetzt.

### Unregelmäßige Verteilung der Hops in Zeit und Frequenz

Aus der Theorie ist bekannt, dass unregelmäßige Verteilungen von Abtastwerten teilweise eine bessere Energie- und Bandbreiteneffizienz erlauben. Unter anderem kann erreicht werden, dass bei linearen Antennen und bei einer ungleichmäßigen Verteilung der Antennenelemente bei gleicher Gesamtapertur eine erhöhte Schätzgenauigkeit (kleinere mittlere Fehlerquadrate) im Vergleich zu einer gleichmäßigen Verteilung erzielt werden kann. Analog zur Antennenverteilung können hier Verteilungen in der Zeit und/oder in der Frequenz (zur Verbesserung der Zeitauflösung) betrachtet werden.

Die Analogie zur Richtungsschätzung anhand von linearen Gruppenantennen deutet darauf hin, dass auch eine ungleichmäßige Verteilung im Zeitschlitzen und Frequenzunterbändern einen Abtausch von Genauigkeit und Mehrwegeauflösung bei gleicher Signalenergie ermöglichen. Es existieren Arbeiten mit Einbringung von künstlichem Jitter der Abtastung z.B. [Chaabane, M.; Biebl, E.M., "A tag complexity reduction approach for code-based cooperative ranging systems," Positioning Navigation and Communication (WPNC), 2013 10th Workshop on , vol., no., pp.1,7, 20-21 March 2013.] und [L. Schuchman, "Dither signals and their effect on quantization noise," IEEE Trans. Communications 12, pp. 162-165, December 1964]. Hier kann z.B. ein Jitter des Paketanfangs auch verwendet werden, um eine Quantisierung zu glätten.

Allerdings werden damit Arbeiten aus dem Kontext des Compressive/Compressed Sensings bzw. Compressive/Compressed Samplings zur Parameter-Rekonstruktion relevant, die den künstlichen Jitter ausnutzen. Weitere verwandte Aspekte sind z.B. Puls-Positionsmodulation von UWB-Systemen.

Arbeiten z.B. [Kalverkamp, Gerrit; Schaffer, Bernhard; Biebl, Erwin, "Nonuniform Stepped Frequency Radar Scheme Reducing Spectrum Occupancy and Data Acquisition Time," Microwave Conference (GeMIC), 2014 German , vol., no., pp.1,4, 10-12 March 2014.], [Kalverkamp, G.; Schaffer, B.; Biebl, E., "OFDM-Based Ranging Approach for Vehicular Safety Applications," Vehicular Technology Conference (VTC Fall), 2013 IEEE 78th, vol., no., pp.1,5, 2-5 Sept. 2013.] deuten auf Vorteile ungleichmäßiger Signalverteilung im Spektrum zur bei der Laufzeitschätzung hin.

Bei Ausführungsbeispielen kann die Basisstation (Datenempfänger) 110 durch den bekannten Frequenzsprung $\Delta f$ zwischen den verschiedenen Aussendungen eine Differenzphase bestimmen, wie im Folgenden ausgeführt wird.

Der Sender 100 kann einen Träger oder ein schmalbandig moduliertes Signal bei jedem Frequenzsprung $k$ mit einer Frequenz $f_k$ und unbekannten, willkürlichen Phase $\varphi_{TX,k}$ aussenden.

Für den Zeitpunkt t bedeutet dies für den Träger

$$s_k(t) = \begin{cases} \exp\left(j\left[2\pi f_k t + \varphi_{TX,k}\right]\right) & \forall\, t_k < t < t_{k-1} - T_G \\ 0 & sonst. \end{cases}$$

Dabei kann $t_k$ der Anfangszeitpunkt des k-ten Frequenzsprungintervalls und $T_G$ das SchutzIntervall sein, das es der Frequenzsynthese im Sender 100 (und bei teilweise analoger Realisierung im Empfänger 110) erlaubt einzuschwingen (loop settling time). Dabei kann bei dem Telegram Splitting Verfahren typischerweise das Schutzintervall $T_G$ größer als die Dauer der Aussendung eines Hops (Sub-Datenpaket) sein.

Das Gesamtsignal kann sich dann ergeben über

$$s(t) = \sum_{k=1}^{K} s_k(t)$$

Der Empfänger 110 kann nun das Gesamtsignal über alle Frequenzsprünge in das Basisband anhand einer gemeinsamen Mittenfrequenz $f_{C,m} = f_C$ (auch aller Empfänger) mit der Empfangsphase $\varphi_{RX,m}$ mischen.

Im Empfänger 110 $m$ kann dann das verrauschte Signal

$$r_m(t) = \beta_m s(t - \tau_m) \exp\left(j\left[-2\pi f_C t + \varphi_{RX,m}\right]\right) + w_m(t)$$

vorliegen. Dabei kann $w_m(t)$ additives Rauschen und $\beta_m > 0$ der Pfadverlust sein.

Aus Kenntnis (oder Detektion) des Sprungmusters können dann die einzelnen Bursts (Sub-Datenpakete) extrahiert werden

$$r_{k,m}(t) = \begin{cases} \beta_m \exp\left(j\left[2\pi(f_k - f_c)t + 2\pi f_k \tau_m + \varphi_{TX,k} + \varphi_{RX,m}\right]\right) + w_m(t) & \forall\, t_k < t < t_{k-1} - T_G \\ w_m(t) & sonst. \end{cases}$$

Im digitalen Basisband kann dann die verbleibende Frequenzabweichung kompensiert werden, so dass nur die zeitlich konstanten Phasenterme übrig bleiben. Alternativ kann direkt anhand der bekannten Frequenzabweichung die Phase geschätzt werden. Hier wird anstelle der Phase $\phi$ der Phasor $p$ = exp($j\phi$) geschätzt (beides ist prinzipiell äquivalent)

$$p_{k,m} = \begin{cases} \beta_m \exp\left(j\left[2\pi f_k \tau_m + \varphi_{TX,k} + \varphi_{RX,m}\right]\right) + w_{m,k} & \forall\ t_k + \tau_m < t < t_{k-1} + \tau_m - T_G \\ w_m(t) & sonst. \end{cases}$$

Die Abstands- bzw. Verzögerungsinformation kann anhand einer Differenzbildung bzw. der konjugiert komplexen Multiplikation

$$\Delta p_{k_1 k_2, m} = p_{k_1, m} \cdot p_{k_2, m}^* \approx \exp\left(j\phi_{k_1, m}\right) \cdot \exp\left(-j\phi_{k_2, m}\right) = \exp\left(j\left[\phi_{k_1, m} - \phi_{k_2, m}\right]\right)$$

ermittelt werden.

Damit kann der gemeinsame Phaseneinfluss des Empfängers $\varphi_{RX,m}$ eliminiert werden

$$\phi_{k_1, m} - \phi_{k_2, m} = 2\pi\left(f_{k_1} - f_{k_2}\right)\tau_m + \varphi_{TX, k_1} - \varphi_{TX, k_2}.$$

Bei einem Ausbreitungspfad resultiert eine Phasenrampe, die von einer willkürlich verteilten Phase $\varphi_{TX,k}$ verfälscht wird. Diese $\Delta p_{k_1 k_2, m}$ werden in den Empfängern 110 gesammelt

$$\begin{pmatrix} \Delta p_{12,m} \\ \Delta p_{13,m} \\ \vdots \\ \Delta p_{1K,m} \end{pmatrix} = \begin{pmatrix} 2\pi(f_1 - f_2)\tau_m + \varphi_{TX,1} - \varphi_{TX,2} \\ 2\pi(f_1 - f_3)\tau_m + \varphi_{TX,1} - \varphi_{TX,3} \\ \vdots \\ 2\pi(f_1 - f_K)\tau_m + \varphi_{TX,1} - \varphi_{TX,K} \end{pmatrix} + \begin{pmatrix} v_{m,1} \\ v_{m,2} \\ \vdots \\ v_{m,K} \end{pmatrix}$$

Die $v_{m,k}$ modellieren einen Rauschterm der Schätzung der $\Delta p_{12,m}$.

Diese werden an eine zentrale Verarbeitungseinheit weitergeleitet (andere Kombinationen der Trägerfrequenzen sind ebenso möglich, diese müssen sich aber auf die obige zurückführen lassen, z.B. $\Delta p_{23,m} = \Delta p_{12,m} \cdot \Delta p_{13,m}^*$).

Durch eine weitere Differenzbildung mit den Phasoren (oder Phasen) eines nächsten Empfängers kann diese Phase jedoch eliminiert werden

$$\Delta\Delta p_{k_1 k_2, m_1, m_2} = \Delta p_{k_1 k_2, m_1} \cdot \Delta p_{k_1 k_2, m_2}^* \approx \exp\left(j2\pi\left(f_{k_1} - f_{k_2}\right) \cdot \left(\tau_{m_1} - \tau_{m_2}\right)\right) + \begin{pmatrix} u_{m,1} \\ u_{m,2} \\ \vdots \\ u_{m,K} \end{pmatrix}$$

dabei ergibt sich der verbleibende Rauschterm $u_{m,k}$.

Aus den Phasen kann dann z.B. eine ggf. mehrdeutige Laufzeit- bzw. Distanzdifferenz abgeleitet werden. Methoden wären dazu Frequenzschätzer (zum Schätzen der dominanten Verzögerung) und Subraum-Methoden wie MUSIC oder ESPRIT.

Unter Hinzunahme mindestens eines weiteren (eines dritten) Empfängers und unter Berücksichtigung eventueller Mehrdeutigkeiten kann dann z.B. anhand von Hyperbelortung eine oder mehrere mögliche 2D-Positionen bestimmt werden. Für 3D-Positionen sind beispielsweise mindestens vier Empfänger notwendig.

Die Betrachtung von Amplituden oder zusätzliche Richtungsinformationen (z.B. durch Richtungsschätzung anhand der Messwerte eines Antennenarray an den Empfängern 110_1 und 110_") kann auch die Auflösung von Mehrdeutigkeiten unterstützen.

Die Berechnung über die Phasoren hat den Vorteil die Auflösung von Mehrdeutigkeiten bzw. Fehlern durch Wrapping-Effekte nach hinten in der Signalverarbeitungskette zu verschieben, so dass dies nur einmal durchgeführt werden muss. Allerdings führt die dafür notwendige multiplikative Verarbeitung zu einer Rauschanhebung, im Vergleich zur direkten Phasenbetrachtung.

Die Mehrdeutigkeit der Distanzdifferenzen definiert sich dabei aus der minimalen Frequenzdifferenz

$$\Delta f_{\min} = \min_{k_1, k_2}\{f_{k_1} - f_{k_2}\}, \text{ so dass } d_{amb} = \frac{c_0}{\Delta f_{\min}}.$$

In der nachfolgenden Tabelle werden beispielhaft Distanzmehrdeutigkeiten $d_{amb}$ in Abhängigkeit des minimalen Frequenzunterschieds $\Delta f_{\min}$ aufgelistet:

| $\Delta f_{\min}$ | $d_{amb}$ |
|---|---|
| 1 kHz | 300 km |
| 10 kHz | 30 km |
| 100 kHz | 3 km |
| 1 MHz | 300 m |
| 10 MHz | 30 m |

Die zentrale Verarbeitungseinheit kann sich in einem der Empfänger befinden oder in einem externen Server oder ggf. im mobilen Sender, wenn das mobile Gerät um eine Empfangseinheit und die verteilten Empfängergeräte um eine Sendeeinheit erweitert ist.

Diese Phasendifferenz ist proportional zur Laufzeit bzw. zum Abstand zwischen Sensorknoten 100 und Basisstation 110, sofern der Frequenzsprung von Sendefrequenz f_1 zu f_2 im Sensorknoten 100 kohärent erfolgen kann. Da die Aussendungen nicht zeitgleich erfolgen ergibt sich durch den transienten Vorgang beim Umschalten der PLL im Sensorknoten 100 und dem Zeitversatz beim Senden der beiden Sendesignale unterschiedlicher Frequenz ein Phasenoffset $\Phi_0$. Ist dieser Phasenoffset in der Basisstation 110 nicht bekannt, lässt sich die Signallaufzeit nicht aus der Differenzphase berechnen.

Der Offset der Phasenlage kann ggf. einmal für den Chip für jede Frequenz und ggf. auch über der Temperatur kalibriert werden. Die Kalibrierung erfolgt bspw. über einen zusätzlichen SDR-Chip auf dem Sensorknoten 100.

Da der Ursprung dieses Phasenoffsets im Sensorknoten 100 liegt, tritt der bei allen Basisstationen 110 gleich auf. Deshalb kann durch Differenz von Phasendifferenzen verschiedener Basisstationen 110 dieser Offset berechnet werden und bei der Laufzeitberechnung kompensiert werden.

Die Verteilung der Telegramm-Teile in der Frequenz ergibt zwei Schwerpunkte zwischen denen ein Abtausch (Trade-Off) stattfinden kann. Gleichmäßig (äquidistant) auf das Spektrum verteilte Signale ergeben eine gute Auflösung von Mehrwegen und minimieren das Auftreten von Mehrdeutigkeiten (nicht äquidistante sondern im Mittel gleichmäßig, aber quasi-zufällig auf das Spektrum verteilte Signale erlauben eine noch bessere Auflösung sind aber rechnerisch schwerer zu behandeln). Auf die Bandkanten konzentrierte Signale erlauben eine genauere Schätzung der Verzögerung stark dominanter Pfade (z.B. im reinen AWGN ist eine Leistungsverteilung komplett auf die Bandkanten optimal). Prinzipiell ist aber jede Verteilung der Sendefrequenzen nutzbar.

Fig. 7 zeigt in einem Diagramm eine Position eines Sensorknotens 110 (TX), die Positionen von zwei Basisstationen 110 (RX) sowie Kurven, die drei Hyperbel-Scharen zeigen. Diese entstehen durch die Mehrdeutigkeit der Phasendifferenzmessung in Bezug auf eine Distanzdifferenz. Dabei werden Signale mit drei unterschiedlichen normierten Wellenlängen (5, 10, 15 bzw. den entsprechenden Trägerfrequenzen) verwendet. Das Zusammenspiel im Diagramm (oder der abstrakten Interpretation) erlaubt die Mehrdeutigkeit aufzulösen und die (näherungsweise mehrfach auftretende) Hyperbel auszuwählen auf der der Sender (TX) liegt. Dabei spannen x- und y-Achsen den durch das Kommunikationssystem abzudeckenden Raum auf, in dem auch der Sender TX geortet wird. Mit anderen Worten, Fig. 7 zeigt eine Mehrdeutigkeitsauflösung anhand von Mehrfrequenzsignalen.

Eine Voraussetzung des oben angegebenen Vorgehens ist eine möglichst genaue Zeitsynchronisierung in Bezug auf den Startzeitpunkt der Kanalabtastung der Basisstationen 110, wobei die (Standard-)Abweichung der notwendigen zeitlichen Synchronisation $\sigma_{\Delta T} \ll \frac{d_{res}}{c_0}$ auf der gewünschten räumlichen Auflösung $d_{res}$ basiert.

In der nachfolgenden Tabelle wir die räumliche Auflösung $d_{res}$ in Abhängigkeit der Zeitsynchronisierung $\sigma_{\Delta T}$ aufgelistet:

| $d_{res}$ | $\sigma_{\Delta T}$ |
|---|---|
| 10 cm | << 0,33 ns |
| 1 m | << 3,3 ns |

(fortgesetzt)

| $d_{res}$ | $\sigma_{\Delta T}$ |
|-----------|---------------------|
| 10 m | << 33 ns |

Weiterhin sollte die Frequenzerzeugung im Sender 100 nach Möglichkeit soweit stabil sein, dass die Phase durch Mittelung über den Träger eines Frequenzsprungs berechnet werden kann $\Delta\varphi_{TX}(t) << 2\pi \,\forall\, t_k < t < t_{k-1} - T_G$. Aber auch eine Phasenschätzung über ein Modell des zeitlich instabilen Oszillators ist möglich.

Bei Ausführungsbeispielen wird davon ausgegangen, dass der Oszillator im Sendeknoten (Datensender) 100 kurzzeitig, d.h. während der Aussendung eines Frequenzsprungs, quasistatisch ist.

Die Frequenzerzeugung im Empfänger 110 wiederrum sollte nach Möglichkeit soweit stabil sein, dass über alle betrachteten Frequenzsprünge hinweg $\varphi_{Rx,m}(t) << 2\pi$ bleibt, weil sonst die Berechnung der Phasenrampe (über der Frequenz) verfälscht werden kann. Alternativ kann ggf. auch eine Modellierung und Kompensation der Phasenveränderung durchgeführt werden (US 8,363,768).

Bei Ausführungsbeispielen wird davon ausgegangen, dass der Oszillator im Empfängerknoten (Datenempfänger) 110 mittel- bzw. langfristig quasistatisch ist.

Systemübersicht Telemetrie verbunden mit Lokalisierung

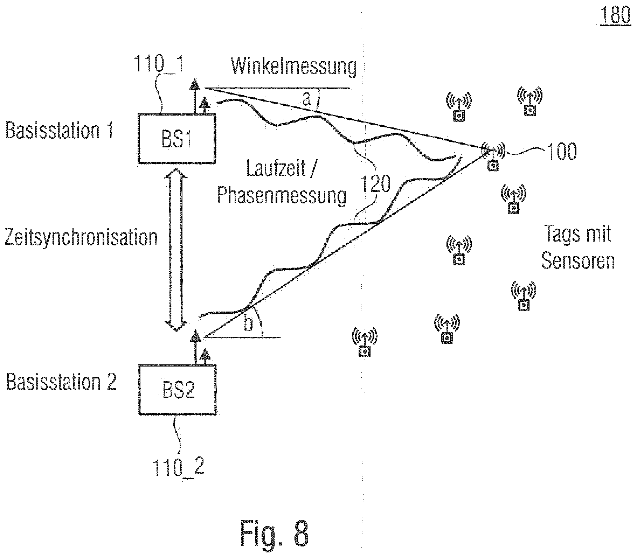

Fig. 8 zeigt eine schematische Ansicht eines Kommunikationssystems 180 mit mehreren Sensorknoten (Datensendern) 100 und zwei Basisstationen (Datenempfängern) 110_1 und 110_2, gemäß einem Ausführungsbeispiel.

Wie in Fig. 8 gezeigt ist, können die zwei Basisstationen 110 ein von einem der Sensorknoten 100 gesendetes Signal 120 empfangen. Die zwei Basisstationen 110_1 und 110_2 können dabei ausgebildet sein, um basierend auf der oben beschriebenen Phasenmessung des empfangenen Signals 120 eine Position des Sensorknotens 100 relativ zu den zwei Basisstationen 110_1 und 110_2 zu bestimmen.

Bei Ausführungsbeispielen können die zwei Basisstationen 110_1 und 110_2 optional zeitsynchronisiert sein. In diesem Fall, kann die Position des Sensorknotens 100 ferner bzw. zusätzlich basierend auf einer Laufzeitmessung ermittelt werden.

Mit anderen Worten, Fig. 8 zeigt eine Übersicht eines Telemetriesystems verbunden mit einer Lokalisierung. Die hierin beschriebene Telemetriewellenform (= Verteilung der Sub-Datenpakete 142_1 bis 142_n in der Zeit und/oder Frequenz) unterstützt die multipfadresistente genaue Winkelmessung sowie Laufzeitmessung der Sensorknoten (z.B. Tags) 100. Die Sensorknoten 100 übertragen Sensorinformationen zu den Basisstationen 110_1 und 110_2 und/oder können lokalisiert werden. Falls die erste Basisstation (BS1) 110_1 nicht mit der zweiten Basisstation (BS2) 110_2 nicht zeitsynchronisiert ist, kann eine Lokalisierung über Winkelmessung und Triangulation erfolgen. Falls die erste Basisstation (BS1) 110_1 mit der zweiten Basisstation (BS2) 110_2 zeitsynchronisiert ist, kann die Lokalisierung (zusätzlich zur Winkelmessung) über Laufzeitmessung erfolgen.

Zugrundeliegender Aufbau des Telemetriesystems

Bei Ausführungsbeispielen kann der Datensender 100 beispielsweise ein Sensorknoten (SK) sein. Der Sensorknoten kann beispielsweise eine Einrichtung zum Energy Harvesting, eine Batterie oder eine andere Stromversorgung aufweisen. Der Sensorknoten 100 überträgt Daten zu einem Datenempfänger.

Bei Ausführungsbeispielen kann der Datenempfänger 110 eine Basisstation (BS) sein. Die Basisstation ist entweder drahtgebunden (Kabel oder Glasfaser) oder drahtlos an die anderen Basisstationen und ggf. einen Kontroll- und Serviceknoten (d.h. insgesamt an ein Kernnetz) angebunden.

Bei Ausführungsbeispielen kann das Telemetriesystem unidirektional, d.h. es werden nur Daten vom Sensorknoten zur Basisstation übertragen, oder bidirektional, d.h. es werden Daten sowohl von dem Sensorknoten zur Basisstation als auch von der Basisstation zum Sensorknoten übertragen, sein.

Im Folgenden werden nur die Sendungen vom Sensorknoten 100 zur Basisstation übertragen.

Zugrundeliegender Aufbau des Ortungssystems

Bei Ausführungsbeispielen kann die Ortung des Telemetrie-Senders (Sensorknoten) 100 an die gesendeten Signale angepasst werden. Räumlich verteilte Empfänger 110 können das über Antennen empfangene Signal 120 (z.B. über eine vorangestellte Präambel oder andere Trainingssignalmuster) erkennen und dieses digital abtasten. Eine Laufzeitmessung ist wg. der typischerweise geringen Bandbreite eines Hops (Sub-Datenpakets) nicht mit guter Genauigkeit und Robustheit möglich. Deshalb wird das Signal über mehrere Hops (Sub-Datenpakete) hinweg als Ganzes betrachtet. Dadurch erhöht sich die nutzbare Gesamtsignalbandbreite.

Unter Berücksichtigung der Frequenzsprünge kann dann in jedem Empfänger 110 der (frequenz-) flache Kanal geschätzt werden. Der Kanal kann also zeitlich-sukzessive im Frequenzbereich abgetastet werden. Durch die Schmalbandigkeit des Gesamtsignals im Vergleich zur Trägerfrequenz gilt die Schmalbandnäherung und auch die Freiraumdämpfung $A(f,d) = A_0(d)$ kann ggf. als konstant über der Frequenz (nicht aber über der Distanz $d$) angenommen werden.

Dann ergeben sich für jeden Empfangspfad $l$ des Mehrwegekanals Phasenrampen des Kanals im Frequenzbereich (diskrete Frequenzen $f_k$) gemäß der Verzögerung (Pfadverzögerung) des Signals

$$h_{l,n}(f_k, \tau) = A_0(d_l) \, exp[\, j \, 2\pi f_k \, \tau + \varphi_n \,]$$

wobei $\varphi\_n$ den initialen Phasenunterschied zwischen Sender und dem n-ten Empfänger bezeichnet. Aus der Steigung der beschriebenen Phasenrampe lässt sich dann zum Beispiel auf die Verzögerung (Pfadverzögerung) $\tau$ zurückschließen. Bei Mehrwegeausbreitung ergibt sich eine Überlagerung

$$h_n (f_k, \tau) = \Sigma_{n=0}^{N-1} h_{l,n} (f_k, \tau)$$

so dass Signale unterschiedlicher Verzögerungen (Pfadverzögerungen) überlagert sind und auch geschätzt werden können z.B. anhand des MUSIC-Algorithmus [Fock, G., Meyr, H., Schulz-Rittich, P., & Schenke, A. "Low complexity high resolution subspace-based delay estimation for DS-CDMA." IEEE International Communications Conference, ICC 2002.]. Die relevante Verzögerung eines direkten Pfades (engl. line of sight, LOS) ergibt sich dann als kleinste Verzögerung also die Verzögerung des ersten eintreffenden/detektierbaren Pfades. Im Fall von verdeckter Sichtverbindung (engl. non-line of sight, NLOS) ergibt sich eine systematisch verfälschte Schätzung, die in der Positionsschätzung abgefangen werden kann.

Dies kann geschehen durch NLOS-Detektion und verwerfen des NLOS-Signals sowie durch zeitliches nachverfolgen des (ersten und ggf. zweiten) Umwegpfades vor und während der Verdeckung.

Im Gegensatz zum klassischen Ansatz, bei dem im Zeitbereich in allen Empfängern 110 eine Korrelation über das gesamte erwartete Signal (d.h. über alle Hops (Sub-Datenpakete) hinweg) durchgeführt wird, um den ersten Pfad zu detektieren, wird bei manchen Ausführungsbeispielen nun die Verzögerung von unterschiedlichen, räumlich verteilten Empfängern 110 verglichen, um auf die Position (des Datensenders 100) zurückzuschließen. Die Anordnung und die Synchronisierung der Empfänger 110 bestimmen den zu verfolgenden Ortungsansatz.

Nach einem ersten Ortungsansatz kann, sofern die Antennen im Raum verteilt sind und die Empfänger zeitsynchron sind, ein TDOA-Verfahren (time difference of arrival, dt. eine Laufzeitdifferenzmessung, bei der der Laufzeitunterschied eines Zeitstempels gemessen wird) verwendet werden.

Nach einem zweiten Ortungsansatz kann, sofern die Antennen dicht zusammen angeordnet sind und die Empfänger 110 zeit- und phasensynchron sind, ein DOA-Verfahren (direction of arrival, dt. eine Richtungsmessung) verwendet werden.

Nach einem dritten Ortungsansatz kann, sofern die Antennen verteilt sind und die Empfänger 110 zeit- und phasensynchron sind, n ein Phasen-TDOA (Mehrdeutigkeiten) verwendet werden wenn zusätzlich die Abtastdaten zentral gesammelt werden, oder es kann Direct-Positioning-Verfahren [N. Hadaschik, B. Sackenreuter, M. Schäfer and M. Faßbinder, "Direct positioning with multiple antenna arrays," 2015 International Conference on Indoor Positioning and Indoor Navigation (IPIN), Banff, Canada, 2015.] basierend auf Phasenmessungen und Modulationsmessungen (Mehrdeutigkeiten) verwendet werden.

Natürlich können auch Kombinationen der oben erwähnten Ortungsansätze verwendet werden, z.B. dass auftretenden Mehrdeutigkeiten bei Phasenmessungen durch DOA- und TDOA-Messungen aufgelöst werden können.

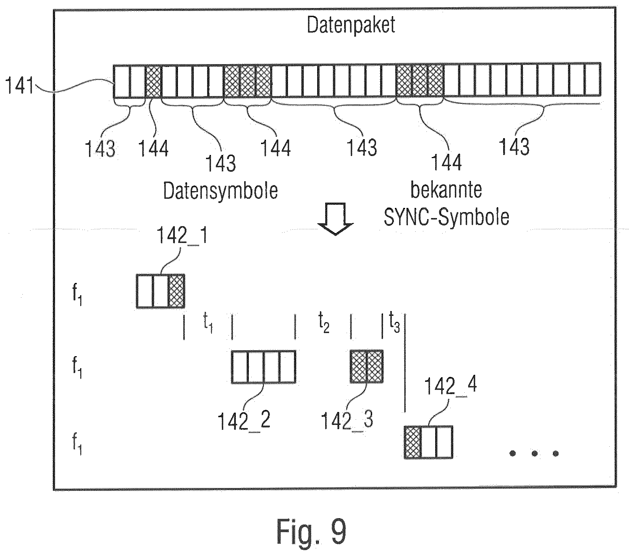

Bei einem verrauschten (phasen-)modulierten Signal können in einem ersten Schritt die Sub-Datenpakete anhand deren bekannten Synchronisationssymbole (Sync-Symbole) detektiert und demoduliert werden. In einem zweiten Schritt können die Datensymbole dekodiert werden. Dadurch sind auch deren ursprüngliche unverrauschten Phasen (bei Phasen-/Frequenzmodulation) bekannt. Im dritten Schritt können diese Phasenoffsets dann wieder zur Ortung herangezogen werden, wie dies in Fig. 9 gezeigt ist.

Fig. 9 zeigt eine schematische Ansicht eines Datenpakets 141 sowie eine Aufteilung desselben in eine Mehrzahl von Sub-Datenpaketen 142_1 bis 142_n, die in der Zeit und in der Frequenz verteilt sind. Das Datenpaket 141 kann sowohl Datensymbole 143 als auch Synchronisationssymbole 144 aufweisen.

Wie in Fig. 9 zu erkennen ist, kann das Datenpaket 141 derart auf die Mehrzahl von Sub-Datenpakete 142_1 bis 142_n aufgeteilt werden, dass die Mehrzahl von Sub-Datenpaketen 142_1 bis 142_n jeweils einen Teil der Datensymbole und/oder einen Teil der Synchronisationssymbole enthalten.

Beispielsweise kann ein erstes Sub-Datenpaket 142_1 zwei Datensymbole und ein Synchronisationssymbol enthalten, wobei ein zweites Sub-Datenpaket 142_2 vier Datensymbole enthalten kann, wobei ein drittes Sub-Datenpaket 142_3 zwei Synchronisationssymbole enthalten kann, und wobei ein viertes Sub-Datenpaket 142_4 zwei Datensymbole und ein Synchronisationssymbol enthalten kann.

Die Sub-Datenpakete 142_1 bis 142_n können ferner in der Frequenz verteilt sein.

Beispielsweise kann das erste Sub-Datenpaket 142_1 auf einer ersten Frequenz f1 gesendet werden, während das zweite Sub-Datenpaket 142_2 und das dritte Sub-Datenpaket 142_3 auf einer zweiten Frequenz f2 gesendet werden können, während das vierte Sub-Datenpaket 142_4 auf einer dritten Frequenz f3 gesendet werden kann.

Die Sub-Datenpakete 142_1 bis 142_n können ferner in der Zeit verteilt sein, so dass zwischen den Sub-Datenpaketen 142_1 bis 142_n Sendepausen vorhanden sind, in denen nicht gesendet wird. Beispielsweise kann zwischen dem ersten und zweiten Sub-Datenpaketen 142_1 und 142_2 eine erste Sendepause t1 vorhanden sein, wobei zwischen dem zweiten und dritten Sub-Datenpaketen 142_2 und 142_3 eine zweite Sendepause t2 vorhanden sein kann, und wobei zwischen dem dritten und vierten Sub-Datenpaketen 142_3 und 142_4 eine dritte Sendepause t3 vorhanden sein kann. Die Sendepausen können dabei gleichlang oder aber auch unterschiedlich lang sein.

Bei Ausführungsbeispielen kann die direkt gewählte und bekannte Signalform berücksichtigt werden.

Weitere Ausführungsbeispiele

Ausführungsbeispiele schaffen ein Kommunikationssystem mit entsprechender Wellenform, die zur Lokalisierung geeignet ist. Das Kommunikationssystem ist dadurch gekennzeichnet, dass das zu übertragene Datenpaket in Subpakete aufgeteilt wird mit zumindest ein Symbol pro Subpaket, das auf eine Trägerfrequenz f1 aufmoduliert wird und weitere Subpakete mit mindestens ein Symbol auf weiteren Trägerfrequenzen f2, ... fn ausgesendet werden. Ferner ist das Kommunikationssystem dadurch gekennzeichnet, dass zur Verringerung der Störempfindlichkeit und Multipfadresistenz können die Subpakete auch zeitlich beabstandet übertragen werden. Ferner ist das Kommunikationssystem dadurch gekennzeichnet, dass die Frequenzabstände fn-fn-1 variabel, aber dem Empfänger bekannt sind. Ferner ist das Kommunikationssystem dadurch gekennzeichnet, dass die Zeitabstände tn-tn-1 variabel, aber dem Empfänger bekannt sind.

Bei Ausführungsbeispielen kann eine Verteilung der Subpakete (Sub-Datenpakete) nach folgenden Regeln erfolgen. Zur Erhöhung der Ortungsgenauigkeit können die Träger gehäuft an den Bandkanten ausgesendet werden. Zur Verbesserung der Multipfadauflösung können die Träger im Band gleichmäßiger verteilt werden. Alternativ kann die Verteilung auch adaptiv erfolgen, je nach Kanaleigenschaften.

Bei Ausführungsbeispielen kann die Bestimmung der Distanz zwischen Basisstationen und Sensorknoten über eine Messung von Phasendifferenzen verschiedener Subpakete (Sub-Datenpakete) bei synchronisierten Basisstationen erfolgen.

Bei Ausführungsbeispielen können die Frequenzsprünge kohärent sein. Es kann eine Kalibrierung des Phasenoffsets der PLL beim Umschalten der Trägerfrequenz und eine Kompensation im Sender oder Empfänger erfolgen. Ferner kann der Sensorknoten den Phasenoffset seines TX Hops (gesendeten Sub-Datenpaketes) gegenüber dem Vorgänger-Hop (zuvor gesendeten Sub-Datenpaket) mittels eines SDR Empfängers messen, der parallel empfängt und kohärent auf einer Frequenz (innerhalb einer z.B. 10 kHz Bandbreite, dann müsste er Frequenz wechseln) bleibt. Es kann eine FFT-Berechnung erfolgen und der gemessene Phasenoffset dann an die Basisstation gesendet werden. Sofern die Kohärenz nicht gegeben ist, können Phasenfehler durch Phasendifferenzbildung verschiedener Basisstationen kompensiert werden.

Bei Ausführungsbeispielen kann eine Phasenmessung auf bekannten Synchronisationssymbolen erfolgen. Nutzung der Datensymbole zur Phasenmessung durch Decodierung und Reencodierung der Datenpakete.

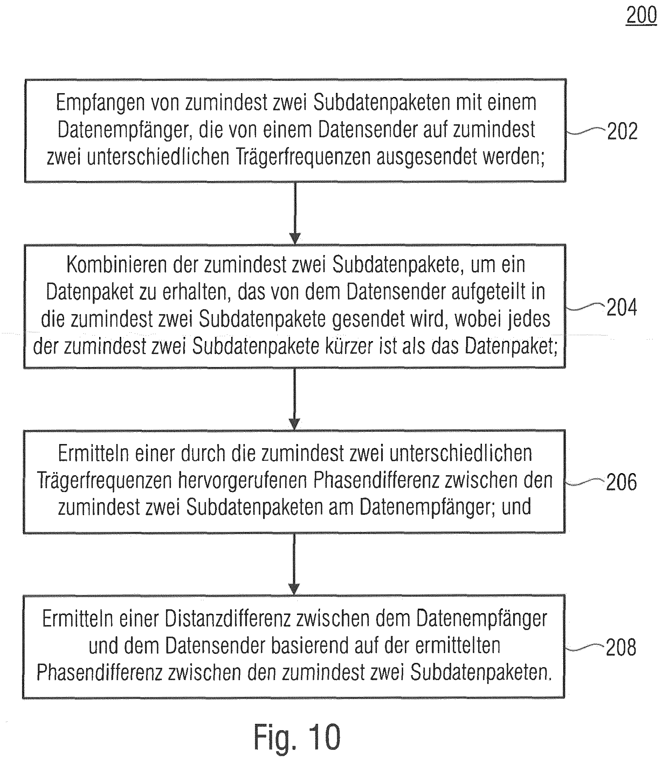

Fig. 10 zeigt ein Flussdiagramm eines Verfahrens 200 zum Ermitteln einer Distanzdifferenz zwischen Datenempfänger und Datensender, gemäß einem Ausführungsbeispiel. Das Verfahren 200 umfasst einen Schritt 202 des Empfangens von zumindest zwei Subdatenpaketen mit einem Datenempfänger, die von einem Datensender auf zumindest zwei unterschiedlichen Trägerfrequenzen ausgesendet werden. Ferner umfasst das Verfahren 200 einen Schritt 204 des Kombinieren der zumindest zwei Subdatenpakete, um ein Datenpaket zu erhalten, das von dem Datensender aufgeteilt in die zumindest zwei Subdatenpakete gesendet wird, wobei jedes der zumindest zwei Subdatenpakete kürzer ist als das Datenpaket. Ferner umfasst das Verfahren 200 einen Schritt 206 des Ermittelns einer durch die zumindest zwei unterschiedlichen Trägerfrequenzen und der Pfadverzögerung hervorgerufenen Phasendifferenz zwischen den zumindest zwei Subdatenpaketen am Datenempfänger. Ferner umfasst das Verfahren 200 einen Schritt 208 des Ermittelns einer Distanzdifferenz zwischen dem Datenempfänger und dem Datensender basierend auf der ermittelten Phasendifferenz zwischen den zumindest zwei Subdatenpaketen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Datenempfänger (110), mit folgenden Merkmalen:

   einer Einrichtung (116) zum Empfangen von Subdatenpaketen, die ausgebildet ist, um zumindest zwei Subdatenpakete (142_1:142_n) von einem Datensender (100) zu empfangen, und um die zumindest zwei Subdatenpakete (142_1:142_n) zu kombinieren, um ein Datenpaket (141) mit Daten zu erhalten, das von dem Datensender (100) aufgeteilt in die zumindest zwei Subdatenpakete (142_1:142_n) gesendet wird, wobei jedes der zumindest zwei Subdatenpakete (142_1:142_n) kürzer ist als das Datenpaket (141), wobei die Einrichtung (116) zum Empfangen von Subdatenpaketen ausgebildet ist, um die zumindest zwei Subdatenpakete (142_1:142_n) auf zumindest zwei unterschiedlichen Trägerfrequenzen zu empfangen;
   einer Einrichtung (117) zum Ermitteln einer Phasendifferenz, die ausgebildet ist, um eine durch die zumindest zwei unterschiedlichen Trägerfrequenzen und der Pfadverzögerung hervorgerufene Phasendifferenz zwischen den zumindest zwei Subdatenpaketen (142_1:142_n) zu ermitteln; und
   einer Einrichtung (118) zum Ermitteln einer Distanzdifferenz zwischen dem Datenempfänger (110) und dem Datensender (100) basierend auf der ermittelten Phasendifferenz zwischen den zumindest zwei Subdatenpaketen (142_1:142_n);
   wobei dem Datenempfänger (110) die zumindest zwei unterschiedlichen Trägerfrequenzen oder ein Frequenzabstand zwischen den zumindest zwei unterschiedlichen Trägerfrequenzen bekannt sind;
   wobei die Einrichtung (116) zum Empfangen von Subdatenpaketen ausgebildet ist, um die zumindest zwei Subdatenpakete (142_1:142_n) zu zumindest zwei unterschiedlichen Empfangszeitpunkten zu empfangen;
   wobei dem Datenempfänger (110) die zumindest zwei unterschiedlichen Empfangszeitpunkte oder ein Zeitabstand zwischen den zumindest zwei unterschiedlichen Empfangszeitpunkten bekannt sind;
   wobei ein Abstand zwischen den zumindest zwei Empfangszeitpunkten mindestens so groß ist, dass die zumindest zwei Subdatenpakete (142_1:142_n) zeitlich voneinander beabstandet empfangen werden.

2. Datenempfänger (110) nach einem der vorhergehenden Ansprüche, wobei die zumindest zwei unterschiedlichen Trägerfrequenzen benachbart zu Frequenzrändern eines zur Übertragung verwendeten Frequenzbands liegen.

3. Datenempfänger (110) nach einem der vorhergehenden Ansprüche, wobei die zumindest zwei unterschiedlichen Trägerfrequenzen innerhalb eines zur Übertragung verwendeten Frequenzbands gleichmäßig verteilt sind.

4. Datenempfänger (110) nach einem der vorhergehenden Ansprüche, wobei ein Frequenzsprung zwischen den zumindest zwei unterschiedlichen Trägerfrequenzen kohärent ist.

5. Datenempfänger (110) nach einem der vorhergehenden Ansprüche, wobei die Einrichtung (117) zum Ermitteln der Phasendifferenz ausgebildet ist, um einen datensenderseitigen Phasenoffset, der durch ein Umschalten zwischen den zumindest zwei Trägerfrequenzen hervorgerufen wird, zu kompensieren.

6. Datenempfänger (110) nach Anspruch 5, wobei zumindest eines der zumindest zwei Subdatenpakete (142_1:142_n) oder ein weiteres Subdatenpaket den datensenderseitigen Phasenoffset enthält.

7. Datenempfänger (110) nach einem der vorhergehenden Ansprüche, wobei die Einrichtung zum Ermitteln der Phasendifferenz ausgebildet ist, um unter Verwendung von bekannten Synchronisationssymbolen (144) der Subdatenpakete (142_1:142_n) eine Phase oder Phasor der jeweiligen Subdatenpakete (142_1:142_n) zu messen.

8. Datenempfänger (110) nach einem der vorhergehenden Ansprüche, wobei die Einrichtung (117) zum Ermitteln der Phasendifferenz ausgebildet ist, um eine Decodierung und Reencodierung von Datensymbolen der Subdatenpakete (142_1:142_n) durchzuführen, um eine Phase oder Phasor der jeweiligen Subdatenpakete (142_1:142_n) zu messen.

9. Kommunikationssystem, mit folgenden Merkmalen:

einem Datensender (100), mit einer Einrichtung (101) zum Erzeugen von Subdatenpaketen, die ausgebildet ist, um ein Datenpaket (141) mit Daten in zumindest zwei Subdatenpakete (142_1:142_n) aufzuteilen, wobei jedes der zumindest zwei Subdatenpakete (142_1:142_n) kürzer ist als das Datenpaket (141), und einer Einrichtung (102) zum Senden von Subdatenpaketen, die ausgebildet ist, um die zumindest zwei Subdatenpakete (142_1:142_n) auf zumindest zwei unterschiedlichen Trägerfrequenzen zu dem Datenempfänger (110) zu senden;

einem Datenempfänger (110), mit einer Einrichtung (116) zum Empfangen von Subdatenpaketen, die ausgebildet ist, um die zumindest zwei Subdatenpakete (142_1:142_n) von dem Datensender (100) zu empfangen, und um die zumindest zwei Subdatenpakete (142_1:142_n) zu kombinieren, um das Datenpaket (141) mit den Daten zu erhalten, das von dem Datensender (100) aufgeteilt in die zumindest zwei Subdatenpakete (142_1:142_n) gesendet wird, wobei die Einrichtung (116) zum Empfangen von Subdatenpaketen ausgebildet ist, um die zumindest zwei Subdatenpakete (142_1:142_n) auf zumindest zwei unterschiedlichen Trägerfrequenzen zu empfangen;

einer Einrichtung (117) zum Ermitteln einer Phasendifferenz, die ausgebildet ist, um eine durch die zumindest zwei unterschiedlichen Trägerfrequenzen und der Pfadverzögerung hervorgerufenen Phasendifferenz zwischen den zumindest zwei Subdatenpaketen (142_1:142_n) zu ermitteln; und

einer Einrichtung (118) zum Ermitteln einer Distanzdifferenz zwischen dem Datenempfänger (110) und dem Datensender (100) basierend auf der ermittelten Phasendifferenz zwischen den zumindest zwei Subdatenpaketen (142_1:142_n);

wobei die Einrichtung zum Senden von Datenpaketen ausgebildet ist, um die zumindest zwei Subdatenpakete (142_1:142_n) zu zumindest zwei unterschiedlichen Sendezeitpunkten zu senden, so dass die zumindest zwei Subdatenpakete (142_1:142_n) zeitlich voneinander beabstandet sind.

10. Kommunikationssystem nach Anspruch 9, wobei der Datenempfänger (110) die Einrichtung (117) zum Ermitteln der Phasendifferenz aufweist oder wobei das Kommunikationssystem eine zentrale Verarbeitungseinrichtung aufweist, die die Einrichtung zum Ermitteln der Phasendifferenz umfasst.

11. Kommunikationssystem nach einem der Ansprüche 9 bis 10, wobei der Datenempfänger (110) die Einrichtung (117) zum Ermitteln der Distanzdifferenz aufweist oder wobei das Kommunikationssystem eine zentrale Verarbeitungseinrichtung aufweist, die die Einrichtung zum Ermitteln der Distanzdifferenz umfasst.

12. Kommunikationssystem nach einem der Ansprüche 9 bis 11, wobei die Einrichtung (102) zum Senden von Datenpaketen ausgebildet ist, um die zumindest zwei Subdatenpakete (142_1:142_n) auf den zumindest zwei unterschiedlichen Trägerfrequenzen, die an Eigenschaften des Kommunikationskanals angepasst sind, zu senden.

13. Kommunikationssystem nach einem der Ansprüche 9 bis 12, wobei der Datensender (100) eine Einrichtung (106) zum Empfangen von Subdatenpaketen aufweist, die ausgebildet ist, um die von dem Datensender (100) eigens ausgesendeten zumindest zwei Subdatenpakete (142_1:142_n) zu empfangen, und um einen Phasenoffset zwischen den zumindest zwei Subdatenpaketen (142_1:142_n) zu messen;

wobei die Einrichtung (102) zum Senden von Subdatenpaketen ausgebildet ist, um ein zusätzliches Datenpaket zu dem Datenempfänger (110) zu senden, das den gemessenen Phasenoffset enthält;

wobei die Einrichtung (117) zum Ermitteln der Phasendifferenz im Datenempfänger (110) ausgebildet ist, um beim Ermitteln der Phasendifferenz zwischen den zumindest zwei Subdatenpaketen (142_1:142_n) den empfangenen datensenderseitigen Phasenoffset zu kompensieren.

14. Kommunikationssystem nach einem der Ansprüche 9 bis 13, wobei die Einrichtung (102) zum Senden von Subdatenpaketen des Datensenders ausgebildet ist, um die Subdatenpakete (142_1:142_n) unregelmäßig in der Zeit und/oder Frequenz zu verteilen.

15. Kommunikationssystem nach einem der Ansprüche 9 bis 14, wobei das Kommunikationssystem einen weiteren Datenempfänger (110) aufweist, mit einer weiteren Einrichtung zum Empfangen von Subdatenpaketen, die ausgebildet ist, um die zumindest zwei Subdatenpakete (142_1:142_n) von dem Datensender (100) zu empfangen, und um die zumindest zwei Subdatenpakete (142_1:142_n) zu kombinieren, um das Datenpaket zu erhalten, das von dem Datensender (100) aufgeteilt in die zumindest zwei Subdatenpakete gesendet wird, wobei die weitere Einrichtung zum Empfangen von Subdatenpaketen ausgebildet ist, um die zumindest zwei Subdatenpakete auf zumindest zwei unterschiedlichen Trägerfrequenzen zu empfangen;

wobei die Einrichtung (117) zum Ermitteln der Phasendifferenz oder eine weitere Einrichtung zum Ermitteln einer Phasendifferenz ausgebildet ist, um eine durch die zumindest zwei unterschiedlichen Trägerfrequenzen hervorgerufenen weitere Phasendifferenz zwischen den zumindest zwei Subdatenpaketen (142_1:142_n) zu ermitteln; und einer Einrichtung zum Ermitteln einer weiteren Distanzdifferenz zwischen dem weiteren Datenempfänger (110) und dem Datensender (100) basierend auf der ermittelten weiteren Phasendifferenz zwischen den zumindest zwei Subdatenpaketen (142_1 :142_n);

wobei das Kommunikationssystem eine Einrichtung zum Ermitteln einer Position des Datensenders (100) aufweist, die ausgebildet ist, um eine Position des Datensenders (100) basierend auf der ermittelten Phasendifferenz und der ermittelten weiteren Phasendifferenz oder basierend auf der ermittelten Distanzdifferenz und der ermittelten weiteren Distanzdifferenz zu ermitteln.

16. Kommunikationssystem nach Anspruch 15, wobei der Datenempfänger (110) und der weitere Datenempfänger (110) zeitsynchronisiert sind.

17. Verfahren (200), mit folgenden Schritten:

Empfangen (202) von zumindest zwei Subdatenpaketen mit einem Datenempfänger (110), die von einem Datensender auf zumindest zwei unterschiedlichen Trägerfrequenzen ausgesendet werden;

Kombinieren (204) der zumindest zwei Subdatenpakete, um ein Datenpaket mit Daten zu erhalten, das von dem Datensender aufgeteilt in die zumindest zwei Subdatenpakete gesendet wird, wobei jedes der zumindest zwei Subdatenpakete kürzer ist als das Datenpaket;

Ermitteln (206) einer durch die zumindest zwei unterschiedlichen Trägerfrequenzen und der Pfadverzögerung hervorgerufenen Phasendifferenz zwischen den zumindest zwei Subdatenpaketen am Datenempfänger (110); und

Ermitteln (208) einer Distanzdifferenz zwischen dem Datenempfänger (110) und dem Datensender basierend auf der ermittelten Phasendifferenz zwischen den zumindest zwei Subdatenpaketen;

wobei die zumindest zwei unterschiedlichen Trägerfrequenzen oder ein Frequenzabstand zwischen den zumindest zwei unterschiedlichen Trägerfrequenzen bekannt sind;

wobei die zumindest zwei Subdatenpakete zu zumindest zwei unterschiedlichen Empfangszeitpunkten empfangen werden;

wobei die zumindest zwei unterschiedlichen Empfangszeitpunkte oder ein Zeitabstand zwischen den zumindest zwei unterschiedlichen Empfangszeitpunkten bekannt sind;

wobei ein Abstand zwischen den zumindest zwei Empfangszeitpunkten mindestens so groß ist, dass die zumindest zwei Subdatenpakete zeitlich voneinander beabstandet empfangen werden.

18. Computerprogramm zur Durchführung des Verfahrens nach Anspruch 17.

## Claims

1. Data receiver (110) comprising:

a unit (116) for receiving sub-data packets, configured to receive at least two sub-data packets (142_1:142_n) from a data transmitter (100) and to combine the at least two sub-data packets (142_1:142_n) to obtain a data packet (141) with data that is transmitted split into the at least two sub-data packets (142_1:142_n) by the data transmitter (100), wherein each of the at least two sub-data packets (142_1:142_n) is shorter than the data packet (141), wherein the unit (116) for receiving sub-data packets is configured to receive the at least two sub-data packets (142_1:142_n) on at least two different carrier frequencies;

a unit (117) for determining a phase difference, configured to determine a phase difference between the at least two sub-data packets (142_1:142_n) that is caused by the at least two different carrier frequencies and the path delay; and

a unit (118) for determining a distance difference between the data receiver (110) and the data transmitter (100) based on the determined phase difference between the at least two sub-data packets (142_1:142_n);

wherein the data receiver (110) knows the at least two different carrier frequencies or a frequency interval between the at least two different carrier frequencies;

wherein the unit (116) for receiving sub-data packets is configured to receive the at least two sub-data packets (142_1:142_n) at least at two different reception times;

wherein the data receiver (110) knows the at least two different reception times or a temporal interval between the at least two different reception times;

wherein an interval between the at least two reception times is at least large enough so that the at least two sub-data packets (142_1:142_n) are received temporally spaced apart from each other.

2. Data receiver (110) according to any one of the preceding claims, wherein the at least two different carrier frequencies are adjacent to frequency edges of a frequency band used for the transfer.

3. Data receiver (110) according to any one of the preceding claims, wherein the at least two different carrier frequencies are evenly distributed within a frequency band used for the transfer.

4. Data receiver (110) according to any one of the preceding claims, wherein a frequency hop between the at least two different carrier frequencies is coherent.

5. Data receiver (110) according to any one of the preceding claims, wherein the unit (117) for determining the phase difference is configured to compensate a data transmitter-side phase offset that is caused by switching between the at least two carrier frequencies.

6. Data receiver (110) according to claim 5, wherein at least one of the at least two sub-data packets (142_1:142_n) or a further sub-data packet includes the data transmitter-side offset.

7. Data receiver (110) according to any one of the preceding claims, wherein the unit for determining the phase difference is configured to, by using known synchronization symbols (144) of the sub-data packets (142_1:142_n), measure a phase or a phasor of the respective sub-data packets (142_1:142_n).

8. Data receiver (110) according to any one of the preceding claims, wherein the unit (117) for determining the phase difference is configured to perform decoding and recoding data symbols of the sub-data packets (142_1:142_n) to measure a phase or a phasor of the respective sub-data packets (142_1:142_n).

9. Communication system comprising:

a data transmitter (100) with a unit (101) for generating sub-data packets, configured to split a data packet (141) with data into at least two sub-data packets (142_1:142_n), wherein each of the at least two sub-data packets (142_1:142_n) is shorter than the data packet (141), and a unit (102) for transmitting sub-data packets, configured to transmit the at least two sub-data packets (142_1:142_n) to the data receiver (110) on at least two different carrier frequencies;

a data receiver (110) with a unit (116) for receiving sub-data packets, configured to receive the at least two sub-data packets (142_1:142_n) from the data transmitter (100) and to combine the at least two sub-data packets (142_1:142_n) to obtain the data packet (141) with data that is transmitted split into the at least two sub-data packets (142_1:142_n) by the data transmitter (100), wherein the unit (116) for receiving sub-data packets is configured to receive the at least two sub-data packets (142_1:142_n) on at least two different carrier frequencies;

a unit (117) for determining a phase difference, configured to determine a phase difference between the at least two sub-data packets (142_1:142_n) that is caused by the at least two different carrier frequencies and the path delay; and

a unit (118) for determining a distance difference between the data receiver (110) and the data transmitter (100) based on the determined phase difference between the at least two sub-data packets (142_1:142_n);

wherein the unit for transmitting data packets is configured to transmit the at least two sub-data packets (142_1:142_n) at least at two different transmission times so that the at least two sub-data packets (142_1:142_n) are temporally spaced apart from each other.

10. Communication system according to claim 9, wherein the data receiver (110) comprises the unit (117) for determining the phase difference, or wherein the communication system comprises a central processing unit including the unit for determining the phase difference.

11. Communication system according to any one of claims 9 to 10, wherein the data receiver (110) comprises the unit (117) for determining the distance difference, or wherein the communication system comprises a central processing unit including the unit for determining the distance difference.

12. Communication system according to any one of claims 9 to 11, wherein the unit (102) for transmitting data packets is configured to transmit the at least two sub-data packets (142_1:142_n) on the at least two different carrier frequencies that are adapted to properties of the communication channel.

13. Communication system according to any one of claims 9 to 12, wherein the data transmitter (100) comprises a unit (106) for receiving sub-data packets, configured to receive the at least two sub-data packets (142_1:142_n) that are transmitted by the data transmitter (100) itself, and to measure a phase offset between the at least two sub-data packets (142_1:142_n);
wherein the unit (102) for transmitting sub-data packets is configured to transmit to the data receiver (110) an additional data packet including the measured phase offset;
wherein the unit (117) for determining the phase difference in the data receiver (110) is configured to compensate the received data transmitter-side phase offset when determining the phase difference between the at least two sub-data packets (142_1:142_n).

14. Communication system according to any one of claims 9 to 13, wherein the unit (102) for transmitting sub-data packets of the data transmitter is configured to distribute the sub-data packets (142_1:142_n) irregularly in time and/or in frequency.

15. Communication system according to any one of claims 9 to 14, wherein the communication system comprises a further data receiver (110) with a further unit for receiving sub-data packets, configured to receive the at least two sub-data packets (142_1:142_n) from the data transmitter (100), and to combine the at least two sub-data packets (142_1:142_n) to obtain the data packet that is transmitted split into the at least two sub-data packets by the data transmitter (100), wherein the further unit for receiving sub-data packets is configured to receive the at least two sub-data packets on at least two different carrier frequencies;
wherein the unit (117) for determining the phase difference or a further unit for determining a phase difference is configured to determine a further phase difference between the at least two sub-data packets (142_1:142_n) that is caused by the at least two different carrier frequencies; and
a unit for determining a further distance difference between the further data receiver (110) and the data transmitter (100) based on the determined further phase difference between the at least two sub-data packets (142_1:142_n);
wherein the communication system comprises a unit for determining a position of the data transmitter (100), configured to determine a position of the data transmitter (100) based on the determined phase difference and the determined further phase difference or based on the determined distance difference and the determined further distance difference.

16. Communication system according to claim 15, wherein the data receiver (110) and the further data receiver (110) are temporally synchronized.

17. Method (200) comprising:

receiving (202) with a data receiver (110) at least two sub-data packets that are transmitted by a data transmitter on at least two different carrier frequencies;
combining (204) the at least two sub-data packets to obtain a data packet with data that is transmitted split into the at least two sub-data packets by the data transmitter, wherein each of the at least two sub-data packets is shorter than the data packet;
determining (206) at the data receiver (110) a phase difference between the at least two sub-data packets that is caused by the at least two different carrier frequencies and the path delay; and
determining (208) a distance difference between the data receiver (110) and the data transmitter based on the determined phase difference between the at least two sub-data packets;
where the at least two different carrier frequencies or a frequency interval between the at least two different carrier frequencies is known;
wherein the at least two sub-data packets are received at least at two different reception times;
where the at least two different reception times or a temporal interval between the at least two different reception times is known;
wherein an interval between the at least two different reception times is at least large enough so that the at least two sub-data packets are received temporally spaced apart from each other.

18. Computer program for performing the method according to claim 17.

**Revendications**

1. Récepteur de données (110), aux caractéristiques suivantes :

un moyen (116) destiné à recevoir des sous-paquets de données, qui est conçu pour recevoir au moins deux sous-paquets de données (142_1:142_n) d'un émetteur de données (100), et pour combiner les au moins deux sous-paquets de données (142_1:142_n) pour obtenir un paquet de données (141) avec des données qui est envoyé par l'émetteur de données (100) divisé en les au moins deux sous-paquets de données (142_1:142_n), où chacun des au moins deux sous-paquets de données (142_1:142_n) est plus court que le paquet de données (141), où le moyen (116) destiné à recevoir des sous-paquets de données est conçu pour recevoir les au moins deux sous-paquets de données (142_1:142_n) sur au moins deux fréquences porteuses différentes ;

un moyen (117) destiné à déterminer une différence de phase, qui est conçu pour déterminer une différence de phase entre les au moins deux sous-paquets de données (142_1:142_n) provoquée par les au moins deux fréquences porteuses différentes et le retard de trajet ; et

un moyen (118) destiné à déterminer une différence de distance entre le récepteur de données (110) et l'émetteur de données (100) sur base de la différence de phase déterminée entre les au moins deux sous-paquets de données (142_1:142_n) ;

dans lequel les au moins deux fréquences porteuses différentes ou une distance en fréquence entre les au moins deux fréquences porteuses différentes sont connues du récepteur de données (110) ;

dans lequel le moyen (116) destiné à recevoir des sous-paquets de données est conçu pour recevoir les au moins deux sous-paquets de données (142_1:142_n) à au moins deux moments de réception différents ;

dans lequel les au moins deux moments de réception différentes ou une distance dans le temps entre les au moins deux moments de réception différentes sont connus du récepteur de données (110) ;

dans lequel une distance entre les au moins deux moments de réception est au moins aussi grande que les au moins deux sous-paquets de données (142_1:142_n) soient reçus distants l'un de l'autre dans le temps.

2. Récepteur de données (110) selon l'une des revendications précédentes, dans lequel les au moins deux fréquences porteuses différentes se trouvent adjacentes à des bords de fréquence d'une bande de fréquences utilisée pour la transmission.

3. Récepteur de données (110) selon l'une des revendications précédentes, dans lequel les au moins deux fréquences porteuses différentes sont réparties de manière uniforme dans une bande de fréquences utilisée pour la transmission.

4. Récepteur de données (110) selon l'une des revendications précédentes, dans lequel un saut de fréquence entre les au moins deux fréquences porteuses différentes est cohérent.

5. Récepteur de données (110) selon l'une des revendications précédentes, dans lequel le moyen (117) destiné à déterminer la différence de phase est conçu pour compenser un décalage de phase du côté de l'émetteur de données qui est provoqué par une commutation entre les au moins deux fréquences porteuses.

6. Récepteur de données (110) selon la revendication 5, dans lequel au moins l'un des au moins deux sous-paquets de données (142_1:142_n) ou un autre sous-paquet de données contient le décalage de phase du côté de l'émetteur de données.

7. Récepteur de données (110) selon l'une des revendications précédentes, dans lequel le moyen destiné à déterminer la différence de phase est conçu pour mesurer, à l'aide de symboles de synchronisation connus (144) des sous-paquets de données (142_1:142_n), une phase ou un phaseur des sous-paquets de données respectifs (142_1:142_n).

8. Récepteur de données (110) selon l'une des revendications précédentes, dans lequel le moyen (117) destiné à déterminer la différence de phase est conçu pour effectuer un décodage et un recodage des symboles de données des sous-paquets de données (142_1: 142_n) pour mesurer une phase ou un phaseur des sous-paquets de données respectifs (142_1: 142_n).

9. Système de communication, aux caractéristiques suivantes :

un émetteur de données (100), avec un moyen (101) destiné à générer des sous-paquets de données, qui est conçu pour diviser un paquet de données (141) avec des données en au moins deux sous-paquets de données (142_1:142_n), où chacun des au moins deux sous-paquets de données (142_1:142_n) est plus court que le paquet de données (141), et un moyen (102) destiné à envoyer des sous-paquets de données qui est conçu pour envoyer les au moins deux sous-paquets de données (142_1:142_n) sur au moins deux fréquences porteuses différentes au récepteur de données (110);

un récepteur de données (110), avec un moyen (116) destiné à recevoir des sous-paquets de données, qui est conçu pour recevoir les au moins deux sous-paquets de données (142_1:142_n) de l'émetteur de données (100), et pour combiner les au moins deux sous-paquets de données (142_1:142_n) pour obtenir le paquet de données (141) avec les données qui est envoyé par l'émetteur de données (100) divisé en les au moins deux sous-paquets de données (142_1:142_n), où le moyen (116) destiné à recevoir des sous-paquets de données est conçu pour recevoir les au moins deux sous-paquets de données (142_1:142_n) sur au moins deux fréquences porteuses différentes;

un moyen (117) destiné à déterminer une différence de phase, qui est conçu pour déterminer une différence de phase entre les au moins deux sous-paquets de données (142_1:142_n) provoquée par les au moins deux fréquences porteuses différentes et le retard de trajet; et

un moyen (118) destiné à déterminer une différence de distance entre le récepteur de données (110) et l'émetteur de données (100) sur base de la différence de phase déterminée entre les au moins deux sous-paquets de données (142_1:142_n);

dans lequel le moyen destiné à envoyer des paquets de données est conçu pour envoyer les au moins deux sous-paquets de données (142_1:142_n) à au moins deux moments d'envoi différents, de sorte que les au moins deux sous-paquets de données (142_1:142_n) soient distants l'un de l'autre dans le temps.

10. Système de communication selon la revendication 9, dans lequel le récepteur de données (110) présente le moyen (117) destiné à déterminer la différence de phase ou dans lequel le système de communication présente un moyen de traitement central qui comporte le moyen destiné à déterminer la différence de phase.

11. Système de communication selon l'une des revendications 9 à 10, dans lequel le récepteur de données (110) présente le moyen (117) destiné à déterminer la différence de distance ou dans lequel le système de communication présente un moyen de traitement central qui comporte le moyen destiné à déterminer la différence de distance.

12. Système de communication selon l'une des revendications 9 à 11, dans lequel le moyen (102) destiné à envoyer des paquets de données est conçu pour envoyer les au moins deux sous-paquets de données (142_1:142_n) sur les au moins deux fréquences porteuses différentes qui sont adaptées à des propriétés du canal de communication.

13. Système de communication selon l'une des revendications 9 à 12, dans lequel l'émetteur de données (100) présente un moyen (106) destiné à recevoir des sous-paquets de données, qui est conçu pour recevoir les au moins deux sous-paquets de données (142_1:142_n) émis spécifiquement par l'émetteur de données (100), et pour mesurer un décalage de phase entre les au moins deux sous-paquets de données (142_1:142_n);

dans lequel le moyen (102) destiné à envoyer des sous-paquets de données est conçu pour envoyer au récepteur de données (110) un paquet de données additionnel qui contient le décalage de phase mesuré;

dans lequel le moyen (117) destiné à déterminer la différence de phase dans le récepteur de données (110) est conçu pour compenser, lors de la détermination de la différence de phase entre les au moins deux sous-paquets de données (142_1:142_n), le décalage de phase du côté de l'émetteur de données reçu.

14. Système de communication selon l'une des revendications 9 à 13, dans lequel le moyen (102) destiné à envoyer des sous-paquets de données de l'émetteur de données est conçu pour distribuer les sous-paquets de données (142_1:142_n) de manière irrégulière dans le temps et/ou en fréquence.

15. Système de communication selon l'une des revendications 9 à 14, dans lequel le système de communication présente un autre récepteur de données (110) avec un autre moyen destiné à recevoir des sous-paquets de données, qui est conçu pour recevoir les au moins deux sous-paquets de données (142_1:142_n) de l'émetteur de données (100), et pour combiner les au moins deux sous-paquets de données (142_1:142_n) pour obtenir le paquet de données qui est envoyé par l'émetteur de données (100) divisé en les au moins deux sous-paquets de données, dans lequel l'autre moyen destiné à recevoir des sous-paquets de données est conçu pour recevoir les au moins deux sous-paquets de données sur au moins deux fréquences porteuses différentes;

dans lequel le moyen (117) destiné à déterminer la différence de phase ou un autre moyen destiné à déterminer une différence de phase est conçu pour déterminer une autre différence de phase entre les au moins deux sous-paquets de données (142_1:142_n) provoquée par les au moins deux fréquences porteuses différentes; et

un moyen destiné à déterminer une autre différence de distance entre l'autre récepteur de données (110) et l'émetteur de données (100) sur base de l'autre différence de phase déterminée entre les au moins deux sous-paquets de données (142_1:142_n);

dans lequel le système de communication présente un moyen destiné à déterminer une position de l'émetteur de données (100), qui est conçu pour déterminer une position de l'émetteur de données (100) sur base de la différence de phase déterminée et de l'autre différence de phase déterminée ou sur base de la différence de distance déterminée et de l'autre différence de distance déterminée.

**16.** Système de communication selon la revendication 15, dans lequel le récepteur de données (110) et l'autre récepteur de données (110) sont synchronisés dans le temps.

**17.** Procédé (200), aux étapes suivantes consistant à:

recevoir (202), par un récepteur de données (110), au moins deux sous-paquets de données qui sont transmis par un émetteur de données sur au moins deux fréquences porteuses différentes;

combiner (204) les au moins deux sous-paquets de données pour obtenir un paquet de données avec des données qui est envoyé par l'émetteur de données divisé en les au moins deux sous-paquets de données, où chacun des au moins deux sous-paquets de données est plus court que le paquet de données;

déterminer (206) une différence de phase entre les au moins deux sous-paquets de données au récepteur de données (110) provoquée par les au moins deux fréquences porteuses différentes et le retard de trajet; et

déterminer (208) une différence de distance entre le récepteur de données (110) et l'émetteur de données sur base de la différence de phase déterminée entre les au moins deux sous-paquets de données;

dans lequel les au moins deux fréquences porteuses différentes ou une distance en fréquence entre les au moins deux fréquences porteuses différentes sont connues;

dans lequel les au moins deux sous-paquets de données sont reçus à au moins deux moments de réception différents;

dans lequel les au moins deux moments de réception différents ou une distance dans le temps entre les au moins deux moments de réception différents sont connus;

dans lequel une distance entre les au moins deux moments de réception est au moins aussi grande que les au moins deux sous-paquets de données soient reçus à une distance l'un de l'autre dans le temps.

**18.** Programme d'ordinateur pour mettre en œuvre le procédé selon la revendication 17.

180

140

f $\uparrow$ 142_1    142_3

142_2    142_4

142_n

...

t

101    100

102

110    116

Einrichtung zum
Erzeugen von
Sub-Datenpaketen

Datensender
Sendeeinrichtung

Datenempfänger

Empfangseinrichtung

Einrichtung
zum Ermitteln
der Phasendiff.

Einrichtung 2
zum Ermitteln
der Phasendiff.

106    Empfangseinrichtung

104

120

114    Sendeeinrichtung

112    117    118

Fig. 1

Fig. 2

Fig. 3

FM-Chirp

Frequenz

Zeit

Fig. 4a

Treppen

Frequenz

Zeit

Fig. 4b

Telegram Splitting

Frequenz

142_2    142_4

142_5

142_1    142_6

142_3

Zeit

Fig. 5

Telegram Splitting

Frequenz

142_2    142_4

142_5

142_1    142_3    142_6

Zeit

Fig. 6

Fig. 7

Fig. 8

EP 3 519 851 B1

Datenpaket

141

143   144   143   144   143   144   143

Datensymbole     bekannte
                 SYNC-Symbole

142_1

$f_1$

$t_1$     $t_2$   $t_3$

$f_1$

142_2   142_3   142_4

$f_1$

Fig. 9

200

Empfangen von zumindest zwei Subdatenpaketen mit einem Datenempfänger, die von einem Datensender auf zumindest zwei unterschiedlichen Trägerfrequenzen ausgesendet werden; ⌐202

Kombinieren der zumindest zwei Subdatenpakete, um ein Datenpaket zu erhalten, das von dem Datensender aufgeteilt in die zumindest zwei Subdatenpakete gesendet wird, wobei jedes der zumindest zwei Subdatenpakete kürzer ist als das Datenpaket; ⌐204

Ermitteln einer durch die zumindest zwei unterschiedlichen Trägerfrequenzen hervorgerufenen Phasendifferenz zwischen den zumindest zwei Subdatenpaketen am Datenempfänger; und ⌐206

Ermitteln einer Distanzdifferenz zwischen dem Datenempfänger und dem Datensender basierend auf der ermittelten Phasendifferenz zwischen den zumindest zwei Subdatenpaketen. ⌐208

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009060592 B4
- DE 102011082098
- WO 2012061479 A1
- WO 0201247 A2
- US 8363768 B

**In der Beschreibung aufgeführte Nicht-Patentliteratur**

- **G. KILIAN ; H. PETKOV ; R. PSIUK ; H. LIESKE ; F. BEER ; J. ROBERT ; A. HEUBERGER.** Improved coverage for low-power telemetry systems using telegram splitting. *Proceedings of 2013 European Conference on Smart Objects, Systems and Technologies (SmartSysTech),* 2013
- **CHAABANE, M. ; BIEBL, E.M.** A tag complexity reduction approach for code-based cooperative ranging systems. *Positioning Navigation and Communication (WPNC), 2013 10th Workshop on,* 20. Marz 2013, 1, , 7
- **L. SCHUCHMAN.** Dither signals and their effect on quantization noise. *IEEE Trans. Communications,* Dezember 1964, vol. 12, 162-165
- **KALVERKAMP, GERRIT ; SCHAFFER, BERNHARD ; BIEBL, ERWIN.** Nonuniform Stepped Frequency Radar Scheme Reducing Spectrum Occupancy and Data Acquisition Time. *Microwave Conference (GeMIC),* 10. Marz 2014, 1, , 4
- OFDM-Based Ranging Approach for Vehicular Safety Applications. **KALVERKAMP, G. ; SCHAFFER, B. ; BIEBL, E.** Vehicular Technology Conference (VTC Fall). IEEE, 02. September 2013, 1, , 5
- **FOCK, G. ; MEYR, H. ; SCHULZ-RITTICH, P. ; SCHENKE, A.** Low complexity high resolution subspace-based delay estimation for DS-CDMA. *IEEE International Communications Conference, ICC,* 2002
- **N. HADASCHIK ; B. SACKENREUTER ; M. SCHÄFER ; M. FAßBINDER.** Direct positioning with multiple antenna arrays. *2015 International Conference on Indoor Positioning and Indoor Navigation (IPIN),* 2015